# EUROPEAN PATENT APPLICATION

(11) **EP 4 578 519 A1**
(43) Date of publication of application: **02.07.2025**
(21) Application number: 24223409.4
(22) Date of filing: 27.12.2024
(51) Int. Cl.: A63F 13/285, A63F 13/24, A63F 13/42

(54) **VIBRATION CONTROL SYSTEM, PROGRAM, AND METHOD, AND GAME CONTROLLER**

(30) Priority: 28.12.2023 JP 2023223491; 21.11.2024 JP 2024203357
(71) Applicant: Nintendo Co., Ltd., Kyoto 601-8501 (JP)
(72) Inventor: AOKI, Takafumi, Kyoto, 601-8501 (JP)
(74) Representative: Bardehle Pagenberg Partnerschaft mbB Patentanwälte Rechtsanwälte

(57) **Abstract**

A vibration control system (10) that controls a vibration motor (206) includes means that obtains vibration instruction data (110, 114) that indicates at least an amplitude, means that generates control data based on the vibration instruction data (110, 114) and controls the vibration motor (206) with the control data, and means that determines whether previous control data is zero. In the control, the control data is generated, in accordance with the determination, by selecting between (i) the control data being generated as gradually bringing the amplitude closer to an amplitude designated by or derived from present vibration instruction data (110, 114) and (ii) the control data being generated immediately corresponding to the amplitude designated by or derived from the present vibration instruction data (110, 114).

## Description

The present disclosure relates to a vibration control system, a program, a method, and a game controller.

### INTRODUCTION

There has conventionally been a game system that provides a vibration effect to a user who plays a game. For example, Japanese Patent Laying-Open No. 2016-202486 discloses a vibration signal generation system used for a game.

### SUMMARY

There has been a room for improvement in reality or variation of vibration feeling in a conventional game system.

(Configuration 1) A vibration control system in one embodiment is a vibration control system that controls a vibration motor of vibration of the vibration motor. Vibration control means includes means that obtains vibration instruction data that indicates at least an amplitude, means that generates control data based on the obtained vibration instruction data and controls the vibration motor with the control data, and means that determines at least one of whether previous control data is zero, whether previous control data is substantially zero, whether a previous amplitude is zero, or whether a previous amplitude is substantially zero. In the control, the control data is generated , in accordance with the determination, by selecting between (i) the control data being generated as gradually bringing the amplitude closer to an amplitude designated by or derived from present vibration instruction data and (ii) the control data being generated immediately corresponding to the amplitude designated by or derived from the present vibration instruction data. The determining means may be means for determination as to being zero or may be means for determination as to being substantially zero. The vibration control system can thus generate vibration excellent in rising performance while it achieves suppression of production of noise.

(Configuration 2) In Configuration 1, in the control, interpolating amplitude data in a second cycle shorter than a first cycle as gradually bringing the amplitude closer to the amplitude designated by or derived from the present vibration instruction data is generated to generate the control data in the second cycle corresponding to the interpolating amplitude data, and to generate the control data in the second cycle corresponding to the amplitude designated by or derived from the present vibration instruction data when it is determined in the determination that the previous amplitude or the previous control data is zero or substantially zero.

(Configuration 3) In Configuration 2, the vibration instruction data is data that further indicates a frequency. In the control, interpolating frequency data in the second cycle shorter than the first cycle as gradually bringing the frequency closer to a frequency designated by or derived from the present vibration instruction data is generated. The generation of the control data is performed to generate the control data corresponding to the frequency designated by the vibration instruction data when it is determined in the determination that a previous amplitude or previous control data is zero or substantially zero.

(Configuration 4) In any of Configurations 1 to 3, the vibration instruction data is data that further indicates a frequency. Any of Configurations 1 to 3 further includes means that stores frequency characteristic data on a voltage allowed to be inputted to the vibration motor at each frequency or a voltage allowed to be outputted from an amplifier that controls the vibration motor at each frequency, means that determines an allowable value of the voltage allowed to be inputted or the voltage allowed to be outputted by referring to the frequency characteristic data based on the frequency designated by the vibration instruction data, and means that determines the amplitude to be used for control based on the determined allowable value.

(Configuration 5) In Configuration 4, the frequency characteristic data is data showing a ratio of the voltage allowed to be inputted or the voltage allowed to be outputted at each frequency to a maximum input voltage to the vibration motor or a maximum output voltage from the amplifier.

(Configuration 6) Any of Configurations 1 to 3 further includes means that generates the vibration instruction data that indicates an amplitude of zero when the vibration instruction data is not obtained in control.

(Configuration 7) A program in one embodiment causes a computer of a vibration control system that controls a vibration motor to perform obtaining vibration instruction data that indicates at least an amplitude of vibration of a vibration motor, generating control data based on the obtained vibration instruction data and controlling the vibration motor with the control data, and determining at least one of whether previous control data is zero, whether previous control data is substantially zero, whether a previous amplitude is zero, and whether an previous amplitude is substantially zero. In the control, the control data is generated,, when it is determined in the determining that previous control data is not zero or substantially zero, the control data as gradually bringing the amplitude closer to an amplitude designated by or derived from present vibration instruction data, and when it is determined in the determining that the previous control data is zero or substantially zero, the control data is generated immediately corresponding to the amplitude designated by or derived from the present vibration instruction data.

(Configuration 8) In Configuration 7, the computer is further caused to perform generating interpolating amplitude data in a second cycle shorter than a first cycle as gradually bringing the amplitude closer to the amplitude designated by or derived from the present vibration instruction data to generate the control data in the second cycle corresponding to the interpolating amplitude data, and to generate the control data in the second cycle corresponding to the amplitude designated by or derived from the present vibration instruction data when it is determined in the determining that the previous amplitude or the previous control data is zero or substantially zero.

(Configuration 9) In Configuration 7 or 8, the vibration instruction data is data that further indicates a frequency. In the control, interpolating frequency data in a second cycle shorter than a first cycle as gradually bringing the frequency closer to a frequency designated by or derived from the present vibration instruction data is generated. The generation of the control data is performed to generate the control data corresponding to the frequency designated by the vibration instruction when it is determined in the determining that the previous amplitude or the previous control data is zero or substantially zero.

(Configuration 10) In any of Configurations 7 to 9, the vibration instruction data is data that further indicates a frequency. In the control, by referring to frequency characteristic data on a voltage allowed to be inputted to the vibration motor at each frequency or a voltage allowed to be outputted from an amplifier that controls the vibration motor at each frequency based on the frequency indicated in the vibration instruction data, an allowable value of the voltage allowed to be inputted or the voltage allowed to be outputted is determined and the amplitude to be used for control is determined based on the determined allowable value.

(Configuration 11) In Configuration 10, the frequency characteristic data is data showing a ratio of the voltage allowed to be inputted or the voltage allowed to be outputted at each frequency to a maximum input voltage to the vibration motor or a maximum output voltage from the amplifier.

(Configuration 12) In any of Configurations 7 to 9, the computer is further caused to perform generating the vibration instruction data that indicates an amplitude of zero when the vibration instruction data is not obtained.

(Configuration 13) In any of Configurations 7 to 9, the program is to be used in a vibration system including a computer device and a controller, the program being to be executed by a computer of the controller.

(Configuration 14) In Configuration 13, the controller is an operation portion separate from the computer device.

(Configuration 15) A method in one embodiment is an information processing method to be used in a vibration control system. The method includes obtaining vibration instruction data that indicates at least an amplitude of vibration of a vibration motor, generating control data based on the obtained vibration instruction data, controlling the vibration motor with the control data, and determining whether previous control data is zero or substantially zero or whether a previous amplitude is zero or substantially zero. In the control, the control data is generated, by selecting between (i) the control data being generated as gradually bringing the amplitude closer to an amplitude designated by or derived from present vibration instruction data when it is determined in the determining that previous control data is not zero or substantially zero, and (ii) the control data being generated immediately corresponding to the amplitude designated by or derived from the present vibration instruction data when it is determined in the determining that the previous control data is zero or substantially zero.

(Configuration 16) A game controller in one embodiment incorporates the vibration motor, the computer, and the program according to any of Configurations 7 to 9 to be executed by the computer.

The foregoing and other objects, features, aspects, and advantages of the present disclosure will become more apparent from the following detailed description of the present disclosure when taken in conjunction with the accompanying drawings.

### BRIEF DESCRIPTION OF THE DRAWINGS

Fig. 1 shows an exemplary illustrative non-limiting drawing illustrating an exemplary vibration control system in the present embodiment.
Fig. 2 shows an exemplary illustrative non-limiting drawing illustrating exemplary generation of vibration instruction data based on a vibration file in a first embodiment.
Fig. 3 shows an exemplary illustrative non-limiting drawing illustrating exemplary frequency characteristic data.
Fig. 4 shows an exemplary illustrative non-limiting drawing illustrating exemplary adjustment processing.
Fig. 5 shows an exemplary illustrative non-limiting drawing illustrating an exemplary flowchart showing a procedure of processing for generating vibration instruction data including a normalized amplitude value, to be performed in a game device in the first embodiment.
Fig. 6 shows an exemplary illustrative non-limiting drawing illustrating an exemplary flowchart showing a procedure for converting the vibration instruction data, to be performed in the game device in the first embodiment.
Fig. 7 shows an exemplary illustrative non-limiting drawing illustrating an exemplary flowchart showing a procedure of processing for generating control data, to be performed in a game controller.
Fig. 8 shows an exemplary illustrative non-limiting drawing illustrating an exemplary flowchart showing a processing procedure of start processing in step S214.
Fig. 9 shows an exemplary illustrative non-limiting drawing illustrating an exemplary waveform of control data generated based on a first impact event.
Fig. 10 shows an exemplary illustrative non-limiting drawing illustrating an exemplary reference waveform between timing T13 and timing T14.
Fig. 11 shows an exemplary illustrative non-limiting drawing illustrating an exemplary waveform of end-timing vibration outputted as a result of processing for each control cycle corresponding to a period from timing T13 to timing T14.
Fig. 12 shows an exemplary illustrative non-limiting drawing illustrating an exemplary waveform of control data generated based on a second impact event.
Fig. 13 shows an exemplary illustrative non-limiting drawing illustrating an exemplary waveform of control data generated based on a third impact event.
Fig. 14 shows an exemplary illustrative non-limiting drawing illustrating an exemplary waveform in a modification.
Fig. 15 shows an exemplary illustrative non-limiting drawing illustrating an exemplary flowchart showing a procedure of processing for generating vibration instruction data including a normalized amplitude value in the game device in a second embodiment.
Fig. 16 shows an exemplary illustrative non-limiting drawing illustrating exemplary generation of vibration instruction data based on a vibration file in the second embodiment.
Fig. 17 shows an exemplary illustrative non-limiting drawing illustrating an exemplary flowchart showing a procedure of execution of a rhythm game in a third embodiment.
Fig. 18 shows an exemplary illustrative non-limiting drawing illustrating an exemplary flowchart showing a procedure of processing for generating vibration instruction data including a normalized amplitude value in the game device in the third embodiment.
Fig. 19 shows an exemplary illustrative non-limiting drawing illustrating an exemplary flowchart showing a procedure for converting the vibration instruction data, to be performed in the game device in a fourth embodiment.
Fig. 20 shows an exemplary illustrative non-limiting drawing illustrating an exemplary flowchart showing a processing procedure in generation of control data, to be performed in the game controller in the fourth embodiment.

### DETAILED DESCRIPTION OF NON-LIMITING EXAMPLE EMBODIMENTS

The present embodiment will be described in detail with reference to the drawings. The same or corresponding elements in the drawings have the same reference characters allotted and description thereof will not be repeated.

### [First Embodiment]

### [A. Overview]

An exemplary configuration of a vibration control system 10 that controls a vibration motor 206 in the present embodiment will be described.

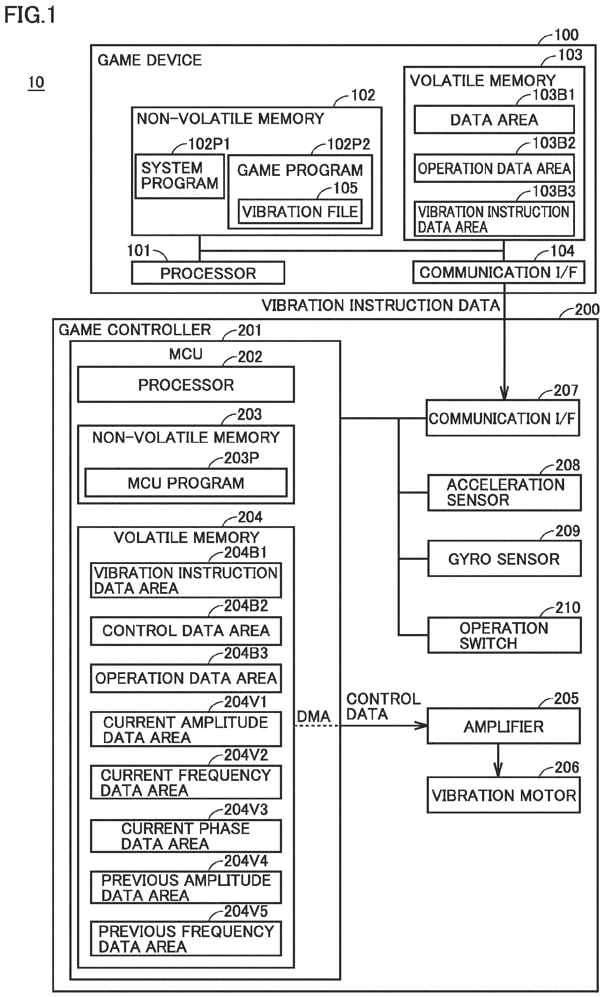

Fig. 1 is a schematic diagram showing exemplary vibration control system 10 in the present embodiment. Vibration control system 10 in the present embodiment is applied, for example, to a game system. A processor, a memory, a communication interface, and the like of vibration control system 10 configure a computer. A processor, a memory, a communication interface, or the like of a game device 100 is also an exemplary computer, and a processor, a memory, a communication interface, or the like of a game controller is also an exemplary computer. The computer may be configured with a plurality of information processing apparatuses, a plurality of device processors, or the like.

Game device 100 shows to a user, video images or images on a display apparatus such as a TV monitor, an LCD, an organic electro luminescence (EL), or a head mounted display (HMD) in accordance with a program, and proceeds with a game. The user operates a game controller 200 in accordance with video images or images shown on the display apparatus. Game device 100 receives input from the user to game controller 200 and proceeds with the game in accordance with the input from the user.

### [B. Configuration of Game Device]

Game device 100 includes a processor 101, a non-volatile memory 102, a volatile memory 103, and a communication interface (I/F) 104. Processor 101 is a processing entity that performs processing provided by game device 100. Processor 101 reads a system program 102P1 and a game program 102P2 stored in non-volatile memory 102, and develops the same on volatile memory 103 for execution. A program in the present disclosure encompasses both of a single program and a program group including a plurality of programs. In a case of the program group, the programs may be stored in different memories and executed by different processors. For example, at least one of the programs may be performed by processor 101 and another one of them may be performed by an MCU 201.

Processor 101 is processing circuitry, and it is implemented, for example, by a central processing unit (CPU). The term "processor" herein encompasses also hard-wired circuitry such as an ASIC or an FPGA in addition to normal meaning of processing circuitry that performs processing in accordance with an instruction code described in a program, such as a CPU, a micro processing unit (MPU), or a graphics processing unit (GPU). In the hard-wired circuitry such as an ASIC or an FPGA, a circuit corresponding to processing to be executed is formed in advance. Furthermore, the "processor" herein may also encompass circuitry in which a plurality of functions are integrated, such as a system on chip (SoC). Processor 101 may be, for example, an SoC in which functions of the CPU and the GPU are integrated. An embodiment in which processing performed by a single processor in the present example is performed as being distributed to a plurality of processors in cooperation is also encompassed herein as a modification.

Non-volatile memory 102 is a non-volatile storage device (storage medium) accessible by processor 101, and a solid state drive (SSD), a NAND flash memory, a hard disk, or the like may be employed as the non-volatile memory. Non-volatile memory 102 may be a storage medium attachable to and removable from game device 100, such as an optical disc or a cartridge. System program 102P1 and game program 102P2 are stored in non-volatile memory 102. System program 102P1 is a program for basic processing of game device 100. System program 102P1 also includes a program for transmission of various types of data stored in volatile memory 103 to game controller 200. Game program 102P2 is a program for execution of a game, and for example, it is stored in a game cartridge or a disc removably attachable to game device 100, or downloaded to non-volatile memory 102 over the Internet. Game program 102P2 includes a vibration file 105.

Vibration file 105 includes information for providing an instruction about a vibration effect for each vibration event. Though the vibration event includes an event that generates impact vibration, it may include an event that generates vibration other than the former. An impact vibration effect refers to an effect that makes the user feel impactive vibration generated as a game proceeds, and refers to strong vibration that lasts for a short period. For example, the instruction about the impact vibration effect is provided in accordance with an event such as collision between objects, explosion, firing of a gun, or the like in a virtual game space, and the impact vibration effect is used also for an expression of a beat or the like. More specifically, for the amplitude, an amplitude corresponding to a maximum allowable voltage of vibration motor 206 is designated. The designated amplitude does not have to be equal to the maximum allowable voltage of vibration motor 206, and it should only be close to the maximum allowable voltage.

The designated amplitude may be, for example, not lower than eighty percent of the maximum allowable voltage. For the vibration motor high in output, output not lower than sixty percent of the maximum allowable voltage may be acceptable. A vibration duration may be set, for example, to a period not longer than one wavelength at a lower limit frequency that can be designated by game program 102P2 or a period not longer than two wavelengths. The vibration duration may be not longer than 50 milliseconds (ms) or a period not longer than 25 ms. The frequency does not have to particularly be restricted. When a low frequency is designated, heavy impact vibration is applied, and when a high frequency is designated, sharp impact vibration is applied. When control input longer than one wavelength (for example, two wavelengths) is provided during a period not longer than 50 ms, impact vibration stronger than in the case of one wavelength can be applied. In the case of a short period such as a vibration period of 50 ms, a person recognizes a difference between one wavelength and two wavelengths as difference in strength of vibration.

For example, the frequency may be varied in accordance with magnitude of collision (a speed of collision, a weight of an object that collides, or the like) in the virtual game space. In other words, effectiveness of the impact vibration effect can be varied by varying the frequency. The frequency may be restricted depending on various conditions of the system. An impact event is an event which is a factor for occurrence of the impact vibration effect, and in other words, it is a condition for occurrence of the impact vibration effect.

The vibration event includes an ordinary vibration event as an event other than the impact vibration event. The ordinary vibration event may be, for example, an event that causes vibration for which a period not shorter than a certain period (for example, a period longer than two wavelengths) is designated or vibration not higher than a certain level in response to the maximum allowable voltage of the vibration motor. An intended frequency, an intended amplitude, and an intended period are designated also for the ordinary vibration event similarly for the impact vibration event. Game program 102P2 can designate an appropriate frequency, an appropriate amplitude, and an appropriate period in accordance with a property of the vibration event.

Volatile memory 103 is a volatile storage device (storage medium) accessible by processor 101, and for example, a dynamic random access memory (DRAM), a static random access memory (SRAM), or the like may be employed as the volatile memory. Volatile memory 103 is provided with a data area 103B1, an operation data area 103B2, and a vibration instruction data area 103B3. Data area 103B1 is, for example, an area where data generated in execution of game program 102P2 by processor 101 is to temporarily be stored.

Operation data area 103B2 is an area where operation data received from game controller 200 is to temporarily be stored. The operation data refers to data representing input to game controller 200 by the user and detection values from an acceleration sensor 208, a gyro sensor 209, an operation switch 210, and the like.

Vibration instruction data area 103B3 is an area where vibration instruction data for vibration of vibration motor 206 provided in game controller 200 is to temporarily be stored. At least one piece of vibration instruction data corresponding to one certain timing can be stored in vibration instruction data area 103B3. Vibration instruction data area 103B3 in the present embodiment is configured such that two pieces of vibration instruction data corresponding to one timing can be stored. The term "memory" herein encompasses at least both of non-volatile memory 102 and volatile memory 103.

Game device 100 communicates with game controller 200 through communication interface 104. Communication interface 104 wirelessly communicants with game controller 200, for example, through a not-shown antenna. Though game device 100 and game controller 200 may wirelessly communicate with each other in any communication method, game device 100 communicates with game controller 200 in accordance with Bluetooth^{®} standards in the present embodiment. Game device 100 and game controller 200 may communicate with each other through a wire, and in this case, communication interface 104 may be implemented, for example, by a terminal in conformity with universal serial bus (USB) standards.

Game device 100 proceeds with a game based on execution of game program 102P2. While the game proceeds, in the virtual game space, an impact event which is an expression including great impact, such as explosion or collision, may occur. Game device 100 generates the vibration instruction data described above also based on occurrence of the impact event and transmits the vibration instruction data to game controller 200. The vibration instruction data will be described in detail later. Game device 100 may generate a plurality of pieces of vibration instruction data in order to have vibration motor 206 vibrate at certain timing. In other words, vibration motor 206 may vibrate based on the plurality of pieces of vibration instruction data at one certain timing. In the present embodiment, vibration motor 206 vibrates based on two pieces of vibration instruction data at one certain timing. Vibration motor 206 may vibrate based on at least three pieces of vibration instruction data at one certain timing.

### [C. Configuration of Game Controller]

Game controller 200 includes a micro controller unit (MCU) 201, an amplifier 205, vibration motor 206, a communication interface (I/F) 207, acceleration sensor 208, gyro sensor 209, and operation switch 210.

Game controller 200 is typically a controller in such a form as being held with both hands or one hand of the user and receives input from the user as a result of operation on operation switch 210 with a user's finger. Game controller 200 is not limited to a game controller in such a form as being held by the user's hand. For example, a general-purpose keyboard or mouse including vibration motor 206 may be applicable, or the game controller may be laid on a floor and receive input based on touch of a sole of the user to a sensor.

MCU 201 includes a processor 202, a non-volatile memory 203, and a volatile memory 204. Processor 202, non-volatile memory 203, volatile memory 204, and communication interface 207 are similar in hardware configuration to processor 101, non-volatile memory 102, volatile memory 103, and communication interface 104 described above, respectively. Therefore, description of the configuration thereof will not be repeated. Processor 202 may be lower in processing capability than processor 101 for reduction in cost.

An MCU program 203P is stored in non-volatile memory 203. MCU program 203P includes a program for various types of processing which will be described later and a program for transmission of detection values from operation switch 210, acceleration sensor 208, and gyro sensor 209 to game device 100 through communication interface 207. Furthermore, in the present embodiment, MCU program 203P includes a program for generation of control data to be transmitted to amplifier 205 based on the vibration instruction data received from game device 100. The control data is typically data that shows a voltage value of a waveform for driving vibration motor 206. The control data is outputted in predetermined cycles (unit time). This cycle is called a control cycle. In the present example, the control data is generated based on the vibration instruction data.

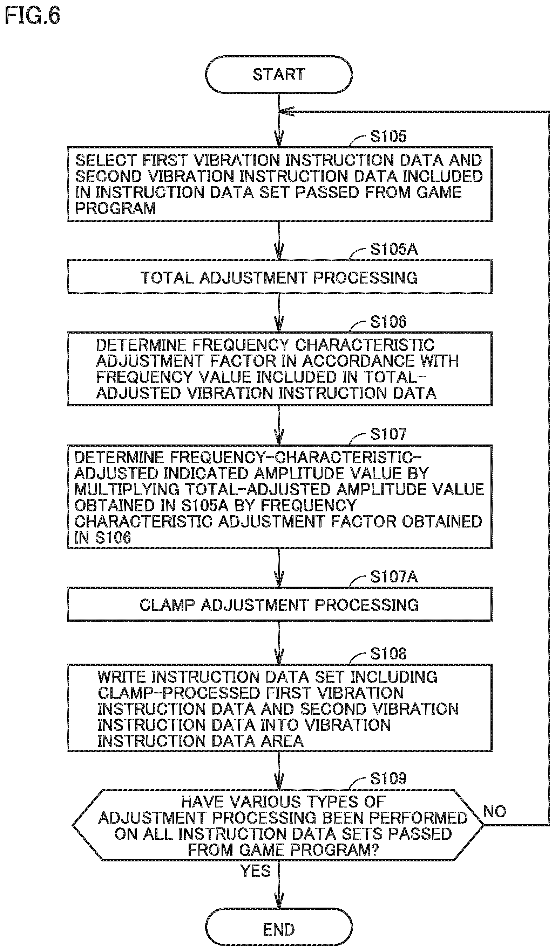

Volatile memory 204 includes a vibration instruction data area 204B1, a control data area 204B, an operation data area 204B3, a current amplitude data area 204V1, a current frequency data area 204V2, a current phase data area 204V3, a previous amplitude data area 204V4, and a previous frequency data area 204V5. Vibration instruction data area 204B 1 is an area where the vibration instruction data received from game device 100 is to temporarily be stored. Control data area 204B2 is an area where the control data generated by processor 202 is to temporarily be stored. Operation data area 204B3 is an area where the operation data is to temporarily be stored. Current amplitude data area 204V1, current frequency data area 204V2, current phase data area 204V3, previous amplitude data area 204V4, and previous frequency data area 204V5 will be described later with reference to Fig. 6. At least one piece of data corresponding to one certain timing can be stored in each of the areas in volatile memory 204 where various types of data are to be stored. Two pieces of data corresponding to one certain timing are stored in each of the areas in volatile memory 204 where various types of data are to be stored in the present embodiment.

Contents in control data area 204B2 in volatile memory 204 are transferred to amplifier 205, for example, by direct memory access (DMA). Amplifier 205 in the present embodiment is an amplifier that carries out pulse width modulation (PWM) control at a frequency of 8 kHz. Amplifier 205 determines a duty ratio every 0.125 ms based on the received control data and supplies electric power to vibration motor 206.

Vibration motor 206 may be, for example, a voice coil motor, an eccentric motor, a linear resonant actuator (what is called an LRA), or the like, and the motor of any type is applicable. Vibration motor 206 may be a coin vibration motor or the like. In an example where vibration motor 206 is an eccentric motor, a weight eccentric in shape is attached to a rotation shaft, and vibration motor 206 generates vibration by rotating. Vibration motor 206 can thus apply vibration to the user who holds game controller 200 where vibration motor 206 is accommodated.

Acceleration sensor 208 detects magnitude of a linear acceleration along directions along predetermined three axes. Acceleration sensor 208 may detect an acceleration in a direction along one axis or directions along two axes. Gyro sensor 209 detects an inclination, an angular velocity, an angular acceleration, and the like of game controller 200 and outputs a result of detection to operation data area 204B3.

Results of detection by acceleration sensor 208 and gyro sensor 209 are outputted to processor 101. Processor 101 in game device 100 can calculate information on motion and/or a posture of game controller 200 based on the results of detection by acceleration sensor 208 and gyro sensor 209.

Operation switch 210 is typically implemented by at least one button, key, and/or stick provided at a surface of game controller 200. Operation switch 210 may be, for example, a button brought in correspondence with a character, such as an A button and a B button, a cross-shaped key for input of upward, downward, left, and right directions, a 3D stick for input of a direction of inclination and an amount of inclination, or the like.

### [D. Flow of Generation of Vibration Instruction Data Based on Vibration File]

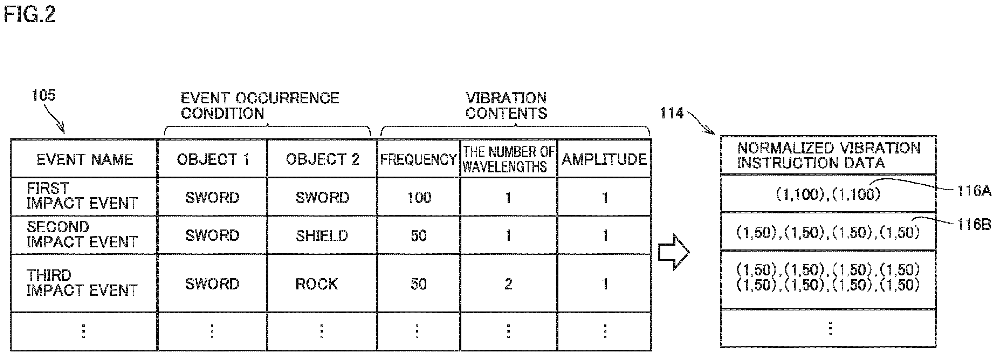

Fig. 2 is a diagram for illustrating exemplary generation of vibration instruction data based on vibration file 105 in a first embodiment. Fig. 2 shows an example in which normalized vibration instruction data 114 is generated based on occurrence of an impact vibration event. The vibration instruction data includes a value that designates a frequency (a frequency value below) and a value that designates an amplitude (an amplitude value below). One piece of vibration instruction data includes one frequency value and one amplitude value. Processor 101 generates normalized vibration instruction data 114 based on vibration file 105.

In the present example, in vibration file 105 and vibration instruction data 114, the amplitude value has been normalized. In the present example, on the other hand, the frequency value has not been normalized. In the present example, the amplitude value has a value between 0 and 1. Thereafter, processor 101 performs total adjustment processing, frequency characteristic adjustment processing, and clamp adjustment processing on the normalized amplitude value in vibration instruction data 114 to convert the normalized amplitude value into an adjusted amplitude value. These types of adjustment processing are not essential. Among these, the clamp adjustment processing does not have to be performed when processor 202 on a side of game controller 200 performs the frequency characteristic adjustment processing (which will be described later). Normalization of the amplitude value is not essential.

The total adjustment processing refers to adjustment processing for pro rata allocation of amplitude values in two pieces of vibration instruction data with 1.0 being defined as the reference, for vibration of vibration motor 206 at one certain identical timing, in an example where two pieces of vibration instruction data are generated. The frequency characteristic adjustment processing refers to adjustment processing for adjusting, in accordance with a frequency value included in vibration instruction data, the amplitude value included in the vibration instruction data in accordance with a maximum voltage allowed to be inputted at that frequency. The clamp adjustment processing refers to adjustment processing for determining an amplitude value at which variation in behavior unintended in a process of gradual variation of the frequency of vibration motor 206 can be suppressed when the frequency value included in vibration instruction data is different from the frequency value included in previous vibration instruction data. By thus performing adjustment processing for adjusting the amplitude value, creation of a game program can be facilitated, strength of vibration can be increased, and an effect of the impact vibration can be enhanced. Thereafter, game device 100 transmits adjustment-processed vibration instruction data 110 which will be described later to game controller 200. Contents of various types of data will be described below.

In the present embodiment, the vibration instruction data designates a vibration effect during a period of T×N (msec.) by designating at least one (N) piece of vibration instruction data every vibration instruction cycle T (msec.) in a chronological order. By adopting such a data format, the vibration effect that varies in amplitude value and frequency can readily be designated. A vibration duration may be designated by a duration or the number of waves.

Specific contents of various types of data will then be described with reference to Fig. 2. In vibration control system 10 in the present embodiment, game device 100 refers to vibration file 105 in game program 102P2, and vibration instruction data 114 is initially generated.

In the present embodiment, when the amplitude value is set to "1", vibration control system 10 causes amplifier 205 to operate to apply a voltage value corresponding to an upper limit of an output voltage therefrom to vibration motor 206. For example, in linear design, when the amplitude value is set to "0.5", vibration control system 10 applies a voltage value in accordance with 50% of the upper limit of the output voltage from amplifier 205 to vibration motor 206. In other words, a value from 0 to 1 indicated by the amplitude value in vibration instruction data 114 does not express the voltage value itself but expresses a ratio to the upper limit of the output voltage from amplifier 205. As will be described later, the amplitude value included in vibration instruction data 114 is adjusted in the total adjustment processing, the frequency characteristic adjustment processing, and the clamp adjustment processing.

Game device 100 performs various types of adjustment processing described above to convert vibration instruction data 114 into adjustment-processed vibration instruction data 110 which will be described later.

In such a flow, game device 100 generates adjustment-processed vibration instruction data 110, and transmits generated adjustment-processed vibration instruction data 110 to game controller 200. Details of the various types of data will be described below.

Fig. 2 shows on the left, vibration file 105 as a table. Fig. 2 shows exemplary vibration file 105 in an example where game program 102P2 provides an adventure game. In vibration file 105 in the example in Fig. 2, data showing an event name, data showing an event occurrence condition, and data showing vibration contents are associated with one another. The data showing the event occurrence condition includes, for example, two types of objects. The data showing the vibration contents includes the frequency, the number of wavelengths, and the amplitude. The vibration duration may be designated instead of the number of wavelengths.

The table showing vibration file 105 in the example in Fig. 2 is a table including an event name as a main key. An object 1 "sword" and an object 2 "sword" are associated with an event name "first impact event." In other words, the first impact event is an event that occurs as a result of collision between the object expressing the sword and the object expressing another sword in a virtual space of the game. A frequency "100", the number of wavelengths "1", and the amplitude "1" are associated with the event name "first impact event." In other words, it is shown that, with a voltage in accordance with the maximum output voltage from amplifier 205 at the frequency of 100 Hz or a maximum input voltage allowed to be inputted to vibration motor 206 on the occurrence of the first impact event being defined as the amplitude, a waveform signal at the frequency of 100 Hz by one wavelength at the frequency of 100 Hz is to be outputted to vibration motor 206.

The object 1 "sword" and the object 2 "shield" are associated with an event name "second impact event." In other words, the second impact event is an event that occurs as a result of collision between the object expressing the sword and the object expressing the shield in the virtual space of the game. The frequency "50", the number of wavelengths "1", and the amplitude "1" are associated with the event name "second impact event." In other words, it is shown that, on the occurrence of the second impact event, with the voltage in accordance with the maximum output voltage from amplifier 205 at the frequency of 50 Hz or the maximum input voltage allowed to be inputted to vibration motor 206 being defined as the amplitude, a waveform signal at the frequency of 50 Hz by one wavelength at the frequency of 50 Hz is to be outputted to vibration motor 206.

The object 1 "sword" and the object 2 "rock" are associated with an event name "third impact event." In other words, the third impact event is an event that occurs as a result of collision between the object expressing the sword and the object expressing the rock in the virtual space of the game. The frequency "50", the number of wavelengths "2", and the amplitude "1" are associated with the event name "third impact event." In other words, it is shown that, on the occurrence of the third impact event, with the voltage in accordance with the maximum output voltage from amplifier 205 at the frequency of 50 Hz or the maximum input voltage allowed to be inputted to vibration motor 206 being defined as the amplitude, a waveform signal at the frequency of 50 Hz by two wavelengths at the frequency of 50 Hz is to be outputted to vibration motor 206. The number of wavelengths does not have to be an integral multiple.

Contents of vibration instruction data 114 will then be described. Fig. 2 shows on the right, vibration instruction data 114 generated by processor 101 based on vibration file 105. In the first impact event, two pieces of vibration instruction data are generated. In the second impact event, four pieces of vibration instruction data are generated. In the third impact event, eight pieces of vibration instruction data are generated.

In vibration instruction data 116A shown in Fig. 2, "1" is designated as the amplitude value and "100" is designated as the frequency value. In vibration instruction data 116B, "1" is designated as the amplitude value and "50" is designated as the frequency value.

For vibration instruction data 114 generated based on occurrence of the first impact event, two pieces of vibration instruction data "(1, 100), (1, 100)" are aligned in a time series manner. A plurality of pieces of vibration instruction data included in vibration instruction data 114 are stored in an order of output to vibration motor 206. A set of pieces of vibration instruction data aligned in the time-series manner in the order of output to vibration motor 206 will be referred to as a "time-series vibration instruction data group."

The time-series vibration instruction data group generated based on occurrence of the second impact event is configured with four pieces of vibration instruction data "(1, 50), (1, 50), (1, 50), (1, 50)". The time-series vibration instruction data group generated based on occurrence of the third impact event is configured with eight pieces of vibration instruction data "(1, 50), (1, 50), (1, 50), (1, 50), (1, 50), (1, 50), (1, 50), (1, 50)".

The number of pieces of vibration instruction data to be included in the time-series vibration instruction data group is determined based on the frequency and the number of wavelengths in vibration file 105. One piece of vibration instruction data is data showing that a waveform at the frequency and the amplitude indicated in the vibration instruction data is to be outputted to vibration motor 206 over a period of 5 ms. The frequency value "100 Hz" is associated with the first impact event in vibration file 105. When vibration motor 206 vibrates at 100 Hz, a period of one wavelength of the vibration waveform is 10 ms. Therefore, vibration instruction data 114 generated based on the first impact event includes two pieces of vibration instruction data, two being calculated by dividing 10 ms by 5 ms.

The frequency value "50 Hz" is associated with the second impact event in vibration file 105. When vibration motor 206 vibrates at 50 Hz, a period of one wavelength of the vibration waveform is 20 ms. Therefore, vibration instruction data 114 generated based on the second impact event includes four pieces of vibration instruction data, four being calculated by dividing 20 ms by 5 ms.

The frequency value "50 Hz" is associated with the third impact event in vibration file 105. When vibration motor 206 vibrates at 50 Hz, a period of two wavelengths of the vibration waveform is 40 ms. Therefore, vibration instruction data 114 generated based on the third impact event includes eight pieces of vibration instruction data, eight being calculated by dividing 40 ms by 5 ms.

A method of determining a period during which control data is to be outputted to vibration motor 206 based on one piece of vibration instruction data will then be described. In the present disclosure, a period during which the control data is to be outputted to vibration motor 206 based on one piece of vibration instruction data will be referred to as a "vibration instruction cycle." The vibration instruction cycle is determined by processor 101 in accordance with characteristics of vibration motor 206. In the present example, the vibration instruction cycle is set to 5 ms as described above.

Processor 101 generates vibration instruction data 114 by executing game program 102P2 and passes at least one piece of vibration instruction data 114 to system program 102P1. System program 102P1 adjusts received vibration instruction data 114 through the adjustment processing and converts vibration instruction data 114 into adjustment-processed vibration instruction data 110. Frequency characteristic data to be used in the frequency characteristic adjustment processing included in the adjustment processing will be described below.

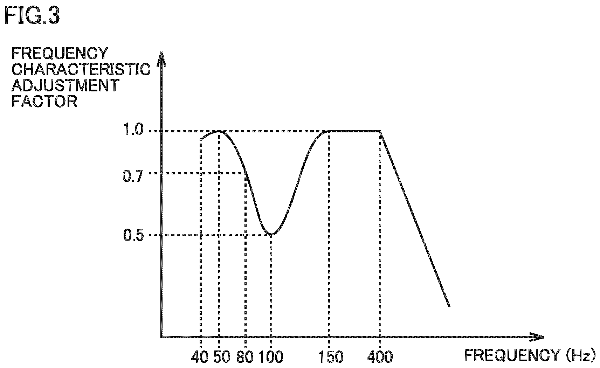

Fig. 3 is a diagram showing frequency characteristic data. The frequency characteristic data shown as a graph in Fig. 3 is data that defines a ratio of an upper limit of a voltage value allowed to be inputted at each frequency to the maximum output voltage from the amplifier. A frequency characteristic adjustment factor on the ordinate is a value calculated as the upper limit of the voltage value allowed to be inputted at each frequency/the maximum output voltage from the amplifier. The frequency characteristic data is used in the frequency characteristic adjustment processing which will be described later. A frequency range where vibration motor 206 is operable is determined by characteristics or the like of vibration motor 206, and it is a range not lower than 40 Hz and not higher than 400 Hz in the present example. As shown in Fig. 3, a lower limit frequency allowed for driving vibration motor 206 in the present example is 40 Hz. The "allowed lower limit frequency" in the present example means a frequency of vibration motor 206 which an application program is permitted to use. When game program 102P2 designates a frequency out of the range not lower than 40 Hz and not higher than 400 Hz in the present example, the frequency is corrected to a value within the range not lower than 40 Hz and not higher than 400 Hz by system software or the like. In the present embodiment, in order to obtain impact vibration of one wavelength, a frequency not higher than 200 Hz is designated.

The maximum input voltage which is the voltage allowed to be inputted for each frequency is determined as the characteristic of vibration motor 206. The upper limit of the input voltage (the voltage to be inputted to vibration motor 206) allowed at each frequency may be determined based on the input voltage at the time when displacement of a vibrator of vibration motor 206 attains to a limit value. Since an amount of vibration of vibration motor 206 in response to input is different depending on the frequency, the upper limit of the input voltage (the input voltage at the time when displacement of the vibrator attains to the limit value) allowed at each frequency is different for each frequency. Vibration control system 10 in the present embodiment is provided with frequency characteristic data shown in Fig. 3 for adjustment of the amplitude value indicated in the vibration instruction data in accordance with the frequency, in consideration of the upper limits of these input voltages.

The frequency characteristic adjustment factor shown on the ordinate in Fig. 3 may take a value calculated by dividing the upper limit of the input voltage allowed at each frequency by the upper limit of the output voltage from amplifier 205, which is within a range from 0 to 1. The frequency which is low in frequency characteristic adjustment factor can be concluded as the frequency at which the amount of vibration of the vibrator in response to the input voltage is large.

Data corresponding to the graph in Fig. 3 may be held in at least one of system program 102P1 and game program 102P2. As shown in Fig. 3, vibration motor 206 in the first embodiment is characterized as follows. Vibration efficiency is high when the vibration motor operates at 100 Hz. When the vibration motor receives input of a high voltage at this frequency, vibration is excessively great. Therefore, the frequency characteristic adjustment factor lowers to 0.5 when the vibration motor operates at 100 Hz. At a frequency at which vibration efficiency is poor, vibration is prevented from becoming weaker by increase in frequency characteristic adjustment factor. When the vibration motor operates at 400 Hz or higher, an allowed voltage value gradually lowers.

Generation of adjustment-processed vibration instruction data 110 through the adjustment processing described above performed on the amplitude value in vibration instruction data 114 by processor 101 will then be described. The amplitude value or the frequency value in the indicated vibration data obtained after the adjustment processing was performed may be referred to as the adjusted amplitude value or the adjusted frequency value.

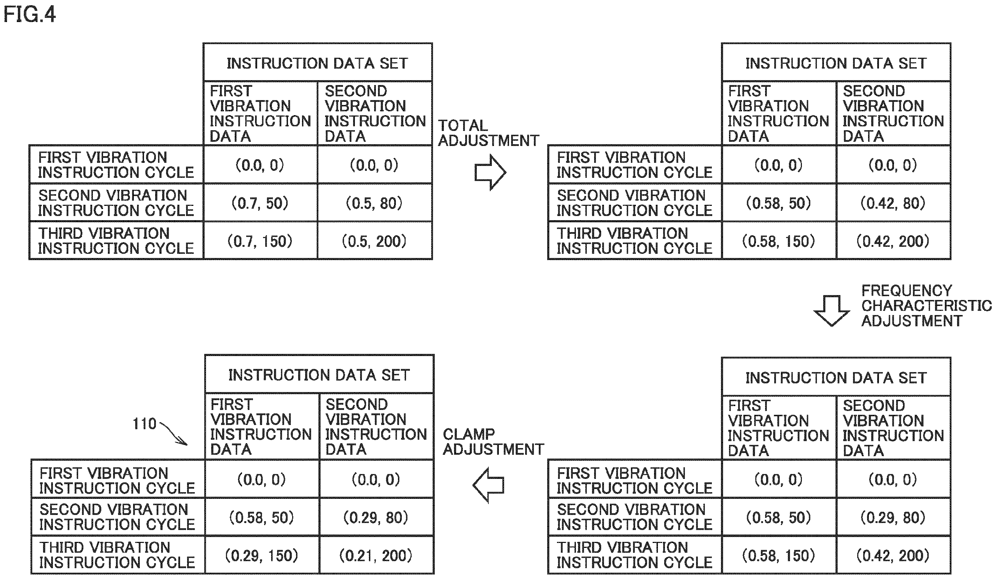

Fig. 4 is a diagram for illustrating the adjustment processing. The adjustment processing is performed by execution of system program 102P1 by processor 101. As described above, vibration control system 10 in the present embodiment is configured to control vibration motor 206 based on two pieces of vibration instruction data. In other words, system program 102P1 is configured to receive an instruction data set including two pieces of vibration instruction data at certain timing. The two pieces of vibration instruction data included in the instruction data set will be referred to as "first vibration instruction data" and "second vibration instruction data" below. The amplitude value designated in the first vibration instruction data will also be referred to as a "first indicated amplitude value" and the frequency value designated in the first vibration instruction data will also be referred to as a "second indicated frequency value." Similarly, the amplitude value designated in the second vibration instruction data will also be referred to as a "second indicated amplitude value" and the frequency value designated in the second vibration instruction data will also be referred to as a "second indicated frequency value."

System program 102P1 processes the instruction data set every vibration instruction cycle described above. For example, when the first impact event and the second impact event in Fig. 2 occur at the same timing, vibration instruction data 116A may be passed as the first vibration instruction data to system program 102P1 and vibration instruction data 116B may be passed as the second vibration instruction data to system program 102P1. In this case, system program 102P1 has vibration motor 206 vibrate such that vibration which is combination of vibration based on vibration instruction data 116A and vibration based on vibration instruction data 116B is applied to the user. In other words, system program 102P1 processes vibration instruction data 116A and vibration instruction data 116B in one vibration instruction cycle.

For the sake of brevity of description of the adjustment processing, Fig. 4 shows an example in which vibration instruction data different from that in the example shown in Fig. 2 is passed to system program 102P1. Fig. 4 shows a first vibration instruction cycle, a second vibration instruction cycle, and a third vibration instruction cycle. These periods are consecutive periods lasting for 15 ms, and during these periods, the first vibration instruction cycle, the second vibration instruction cycle, and the third vibration instruction cycle proceed in the time-series manner in this order. An example in which different instruction data sets are passed to system program 102P1 in the vibration instruction cycles will be described with reference to Fig. 4.

Conversion of the vibration instruction data in the first vibration instruction cycle will initially be described below. In the first vibration instruction cycle, the instruction data set including the first vibration instruction data that designates a first indicated amplitude value "0.0" and a first indicated frequency value "0" and second vibration instruction data that similarly designates a second indicated amplitude value "0.0" and a second indicated frequency value "0" is passed to system program 102P1. In other words, in the first vibration instruction cycle, no vibration instruction data is passed to system program 102P1, or vibration instruction data indicating that vibration motor 206 is not to vibrate is passed to system program 102P1. In this case, adjustment is made in none of the total adjustment processing, the frequency characteristic adjustment processing, and the clamp adjustment processing, and the amplitude value and the frequency remaining at "0.0" are ultimately converted as vibration instruction data 110.

In the second vibration instruction cycle, the instruction data set including the first vibration instruction data that designates the first indicated amplitude value "0.7" and the first indicated frequency value "50 Hz" and the second vibration instruction data that designates the second indicated amplitude value "0.5" and the "second indicated frequency value "80 Hz" is passed to system program 102P1. When system program 102P1 receives the instruction data set including the two pieces of vibration instruction data in which the amplitude value is not 0, it performs total adjustment processing to adjust the amplitude value indicated in the first vibration instruction data and the second vibration instruction data. The total adjustment processing refers to processing for pro rata allocation such that a total value of the amplitude values indicated in the two pieces of the vibration instruction data is calculated as 1 when the total of the amplitude values indicated in the two pieces of the vibration instruction data exceeds 1 within the same vibration instruction cycle.

Specifically, processor 101 determines whether or not the total value of the amplitude value indicated in the first vibration instruction data and the amplitude value indicated in the second vibration instruction data exceeds 1. When the total value does not exceed 1, processor 101 quits the total adjustment processing without changing each amplitude value. When the total value exceeds 1, processor 101 divides the amplitude value indicated in each of pieces of the vibration instruction data by the total value of the amplitude values indicated in the pieces of vibration instruction data. The amplitude value in total-adjusted first vibration instruction data is adjusted to "0.58" and the amplitude value in the second vibration instruction data is adjusted to "0.42".

The frequency characteristic adjustment processing will then be described. In the frequency characteristic adjustment processing, the amplitude value is adjusted with the frequency characteristic data described with reference to Fig. 3. Processor 101 obtains the frequency characteristic adjustment factor at the designated frequency value from the data corresponding to the graph in Fig. 3. For the first vibration instruction data, processor 101 refers to the frequency characteristic data corresponding to the graph in Fig. 3 to specify that the frequency characteristic adjustment factor is "1.0" when vibration motor 206 operates at the frequency of 50 Hz. Processor 101 multiplies the amplitude value "0.58" indicated in the first vibration instruction data by the frequency characteristic adjustment factor "1.0" to adjust the amplitude value to "0.58". In other words, since the frequency characteristic adjustment factor for 50 Hz is "1.0" in this case, the amplitude value in the first vibration instruction data in the second vibration instruction cycle is not varied in the frequency characteristic adjustment processing.

Similarly, for the second vibration instruction data, processor 101 specifies that the frequency characteristic adjustment factor is "0.7" when vibration motor 206 operates at the frequency of 80 Hz. Processor 101 multiplies the amplitude value "0.42" indicated in the total-adjustment-processed second vibration instruction data by the frequency characteristic adjustment factor "0.7" to adjust the amplitude value to "0.29". Though a number is rounded off to the second decimal place in the present embodiment, calculation to the third or further decimal place may also be performed.

The first vibration instruction data and the second vibration instruction data in the third vibration instruction cycle will then be described. In the third vibration instruction cycle, the instruction data set including the first vibration instruction data that designates the first indicated amplitude value "0.7" and the first indicated frequency value "150 Hz" and the second vibration instruction data that designates the second indicated amplitude value "0.5" and the second indicated frequency value "200 Hz" is passed to system program 102P1. In the third vibration instruction cycle again, as in the second vibration instruction cycle, the amplitude values indicated in the first vibration instruction data and the second vibration instruction data are adjusted in the total adjustment. The amplitude value in the total-adjusted first vibration instruction data in the third vibration instruction cycle is adjusted to "0.58" and the amplitude value in the second vibration instruction data is adjusted to "0.42".

Processor 101 then refers to the frequency characteristic data corresponding to the graph in Fig. 3 to specify that the frequency characteristic adjustment factor is "1.0" when vibration motor 206 operates at the frequency of 150 Hz. Processor 101 multiplies the amplitude value "0.58" indicated in the first vibration instruction data by the frequency characteristic adjustment factor "1.0" to adjust the amplitude value to "0.58". For the second vibration instruction data in the third vibration instruction cycle, processor 101 specifies that the frequency characteristic adjustment factor is "1.0" when vibration motor 206 operates at the frequency of 200 Hz. Processor 101 multiplies the amplitude value "0.42" indicated in the second vibration instruction data by the frequency characteristic adjustment factor "1.0" to adjust the amplitude value to "0.42".

As will be described later, the clamp adjustment processing refers to processing for suppressing excess of the input voltage to the vibration motor over an allowable value in a process of processing for gradually varying the frequency when a previous indicated frequency value is different from a presently indicated frequency value in game controller 200. The processing performed in game controller 200 which will be described later is processing for gradually bringing an immediately preceding amplitude value and an immediately preceding frequency closer to the indicated amplitude and the indicated frequency and processing for adjusting the first indicated amplitude value and the second indicated amplitude value in conformity with the frequency lowest in frequency characteristic adjustment factor (that is, the frequency highest in vibration efficiency) in gradual variation in frequency within the vibration instruction cycle.

Processor 101 initially determines a first clamp value and a second clamp value for the first vibration instruction data and the second vibration instruction data. Among frequencies from the frequency value in the vibration instruction data in a previous vibration instruction cycle to the frequency value in the vibration instruction data in a present vibration instruction cycle, the lowest frequency is determined as the clamp value. Description will be given with reference to the third vibration instruction cycle by way of example. For the first vibration instruction data, the first indicated frequency value at a time point in the second vibration instruction cycle is 50 Hz, and the first indicated frequency value at a time point in the third vibration instruction cycle is 150 Hz. Referring back to Fig. 3, the frequency lowest in frequency characteristic adjustment factor among the frequencies from 50 Hz to 150 Hz is 100 Hz. Therefore, processor 101 sets "0.5" which is the frequency characteristic adjustment factor at 100 Hz as the first clamp value.

For the second vibration instruction data, the second indicated frequency value at a time point in the second vibration instruction cycle is 80 Hz and the second indicated frequency value at a time point in the third vibration instruction cycle is 200 Hz. Referring back to Fig. 3, the frequency lowest in frequency characteristic adjustment factor among the frequencies from 80 Hz to 200 Hz is 100 Hz. Therefore, processor 101 determines as the first clamp value, "0.5" which is the frequency characteristic adjustment factor at 100 Hz as the second clamp value.

For the first vibration instruction data, processor 101 divides the frequency-characteristic-adjusted first indicated amplitude value by the sum of the frequency-characteristic-adjusted first indicated amplitude value and the frequency-characteristic-adjusted second indicated amplitude value. Processor 101 determines the clamp value by multiplying the value obtained by division by the first clamp value described above. For example, the first clamp value is calculated as "0.29" which is obtained by calculation of the first clamp value × the frequency-characteristic-adjusted first indicated amplitude value/(the frequency-characteristic-adjusted first indicated amplitude value + the frequency-characteristic-adjusted second indicated amplitude value). When the frequency-characteristic-adjusted first indicated amplitude value is larger than the determined clamp value, processor 101 sets the clamp value as the clamp-adjusted first indicated amplitude value. In other words, since "0.58" which is the frequency-adjusted amplitude value is larger than "0.29" which is the determined first clamp value, processor 101 determines "0.29" as the clamp-adjusted first indicated amplitude value.

Similarly, for the second vibration instruction data, processor 101 divides the frequency-characteristic-adjusted second indicated amplitude value by the sum of the frequency-characteristic-adjusted first indicated amplitude value and the frequency-characteristic-adjusted second indicated amplitude value. Processor 101 multiplies the value obtained by division by the second clamp value. Specifically, the clamp value determined by this calculation is 0.21 and processor 101 determines this value as the clamp value. Since "0.42" which is the frequency-adjusted amplitude value is larger than "0.21" which is the determined clamp value, processor 101 determines "0.21" as the clamp-adjusted second indicated amplitude value.

Consequently, the clamp-adjustment-processed first vibration instruction data is converted as vibration instruction data 110 indicating the first indicated amplitude value "0.29" and the first indicated frequency value "150" and the clamp-adjustment-processed second vibration instruction data is converted as vibration instruction data 110 indicating the second indicated amplitude value "0.21" and the second indicated frequency value "200". Processor 101 stores the instruction data set including adjustment-processed vibration instruction data 110 in vibration instruction data area 103B3 in accordance with system program 102P1, and thereafter transmits the instruction data set to game controller 200 in the order of storage. MCU 201 in game controller 200 generates the control data based on received converted vibration instruction data 110 and has vibration motor 206 driven based on the control data.

### [E. Procedure of Processing for Generating Vibration Instruction Data in Game Device]

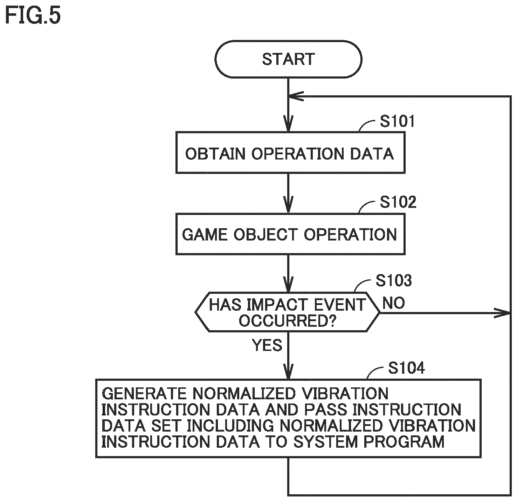

Processing performed by processor 101 of game device 100 will be described below with reference to a flowchart. Fig. 5 is a flowchart showing a procedure of processing for generating vibration instruction data 114 including a normalized amplitude value, to be performed in the first embodiment. Processing in the flowchart shown in Fig. 5 is performed by execution of game program 102P2 by processor 101 and started to be performed in response to start of execution of game program 102P2.

Processor 101 obtains operation data (step S101). Processor 101 has a game object operate based on the received operation data (step S102). The game object refers to an object to be operated by the user in the virtual space in a game, and it may typically be a player character, a vehicle body in a car racing game, or the like.

Processor 101 determines whether or not an impact event has occurred in the game based on operation of the game object or on an in-game event irrelevant to the operation of the game object (step S103). The impact event refers to an event defined as a condition for occurrence of the vibration effect, and includes various events depending on contents of the game, such as contact of a weapon such as a sword held by a player character with an enemy object in a case of an adventure game or collision of the vehicle body operated by the user against another vehicle body in a case of a car racing game.

When no impact event has occurred in the game (NO in step S103), processor 101 has the process return to step S101. When the impact event has occurred in the game (YES in step S103), processor 101 generates vibration instruction data 114 (typically, the time-series vibration instruction data group) and passes generated vibration instruction data 114 to system program 102P1 (step S104). At this time, the vibration instruction data (or the time-series vibration instruction data group) may be generated by reading vibration file 105 described above.

Processor 101 passes the instruction data set including vibration instruction data 114 to system program 102P1 and thereafter has the process return to step S101. While the game is being executed, processor 101 repeatedly performs the processing in steps S101 to S104. When two impact events occur at the same timing, processor 101 passes the instruction data set including the first vibration instruction data and the second vibration instruction data to system program 102P1 based on the two impact events. When a single impact event has occurred, processor 101 passes the instruction data set including only the first vibration instruction data to system program 102P1 based on the single impact event. In this case, processor 101 may incorporate in the instruction data set, the second vibration instruction data that designates the second indicated amplitude value "0" and the second indicated frequency value "0". The first vibration instruction data and the second vibration instruction data may be generated based on the single impact event. Game device 100 in the present embodiment thus generates vibration instruction data 114 based on occurrence of the impact event as the game proceeds, and passes the vibration instruction data to system program 102P1. After processor 101 performs step S104, it performs other processing to proceed with the game.

Fig. 6 is a flowchart showing a procedure for converting the vibration instruction data, to be performed in game device 100 in the first embodiment. Processing in the flowchart shown in Fig. 6 is performed by execution of system program 102P1 by processor 101. In Fig. 6, the adjustment processing described above is performed.

The flowchart shown in Fig. 6 is performed based on the instruction data set being passed from game program 102P2 to system program 102P1. Processor 101 selects the first vibration instruction data and the second vibration instruction data passed from game program 102P2 (step S105).

Processor 101 performs the total adjustment processing on the first vibration instruction data and the second vibration instruction data (step S105A). Processor 101 then determines the frequency characteristic adjustment factors in accordance with the first indicated frequency value and the second indicated frequency value included in the total-adjusted first vibration instruction data and the total-adjusted second vibration instruction data, respectively (step S106). Specifically, processor 101 determines the frequency characteristic adjustment factor based on the data corresponding to the graph in Fig. 3. Processor 101 multiplies the total-adjusted first indicated amplitude value and the total-adjusted second indicated amplitude value by the frequency characteristic adjustment factor corresponding to the first indicated frequency value and the frequency characteristic adjustment factor corresponding to the second indicated frequency value, respectively, to determine the frequency-characteristic-adjusted first indicated amplitude value and the frequency-characteristic-adjusted second indicated amplitude value, respectively (step S107). In other words, in step S106 and step S107, the frequency characteristic adjustment processing described above is performed.

Furthermore, processor 101 performs the clamp adjustment processing on each of the frequency-characteristic-adjusted first indicated amplitude value and the frequency-characteristic-adjusted second indicated amplitude value (step S107A). Processor 101 writes the instruction data set including the clamp-adjustment-processed first vibration instruction data and the clamp-adjustment-processed second vibration instruction data into vibration instruction data area 103B3 (step S108). Processor 101 determines whether or not it has processed all instruction data sets passed from game program 102P2 (step S109).

When processor 101 has not performed the adjustment processing on all pieces of vibration instruction data 114 (NO in step S109), it has the process return to step S105. When processor 101 has completed the adjustment processing on all pieces of vibration instruction data 114 (YES in step S109), it quits the process in the flowchart. Adjustment-processed vibration instruction data 110 shown in a lower left portion of Fig. 4 is thus written in vibration instruction data area 103B3.

Processor 101 transmits adjustment-processed vibration instruction data 110 stored in vibration instruction data area 103B3 to game controller 200 through communication interface 104. Game controller 200 stores received adjustment-processed vibration instruction data 110 in vibration instruction data area 204B1 in volatile memory 204.

### [F. Procedure of Processing for Generating Control Data in Game Controller]

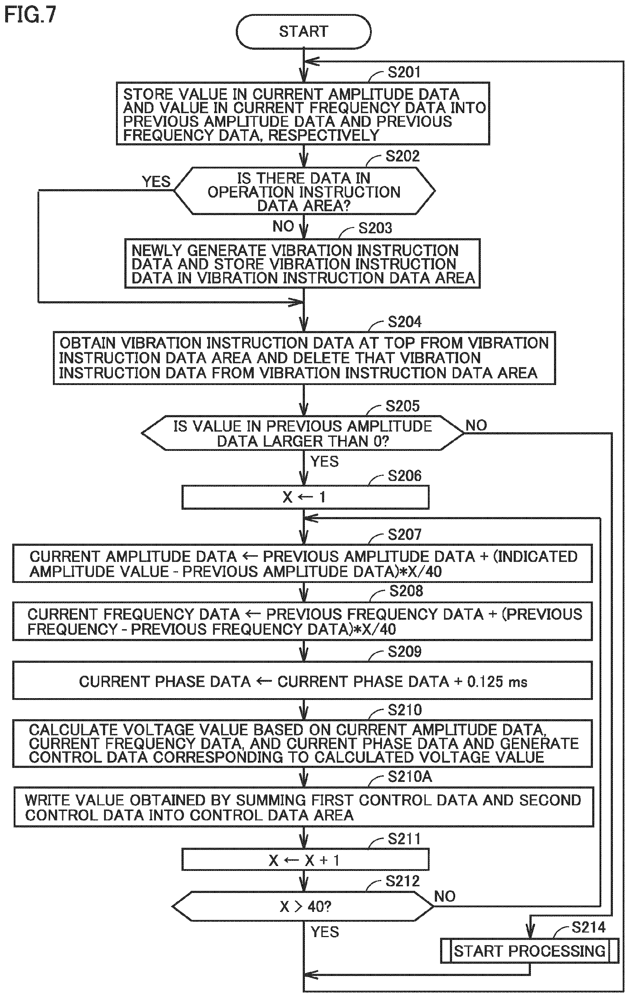

Processing performed by MCU 201 of game controller 200 will be described below with reference to a flowchart. Fig. 7 is a flowchart showing a procedure of processing for generating control data, to be performed in game controller 200 in the first embodiment. The control data refers to data generated by processor 202 based on the adjustment-processed first vibration instruction data and the adjustment-processed second vibration instruction data. The control data is typically data that shows a voltage value for driving vibration motor 206 and data (instantaneous value) that shows a voltage value at each instant of a waveform at the designated frequency and amplitude. The control data is outputted at predetermined intervals, and the interval will be referred to as a "control cycle" below.

In the control cycle in the present embodiment, amplifier 205 operates at 8 kHz and the control data is supplied to vibration motor 206 every 0.125 ms; the cycle thereof is 0.125 ms. MCU 201 generates from a single piece of vibration instruction data, pieces of control data in number calculated by dividing the vibration instruction cycle by the control cycle. In the present embodiment, the vibration instruction cycle is a period of 5 ms and the control cycle is 0.125 ms. Therefore, processor 202 generates forty pieces of control data from a single piece of vibration instruction data. A reference waveform is determined every control cycle (0.125 ms) based on the frequency value and the amplitude value in adjustment-processed vibration instruction data 110. The reference waveform refers to a waveform determined for each control cycle and a waveform for specifying a voltage value to be outputted as the control data. Processor 202 determines a voltage value to be outputted as the control data based on the reference waveform.

Processing in the flowchart shown in Fig. 7 is performed by execution of MCU program 203P by processor 202. The processing in the flowchart shown in Fig. 7 is started, for example, based on supply of power to game controller 200.

For each of the first vibration instruction data and the second vibration instruction data included in the instruction data set, current amplitude data area 204V1, current frequency data area 204V2, and current phase data area 204V3 are prepared in volatile memory 204, and current amplitude data, current frequency data, and current phase data are stored therein, respectively. In other words, current amplitude data area 204V1 is configured to store the first current amplitude data based on the first vibration instruction data and the second current amplitude data based on the second vibration instruction data. When the first current amplitude data and the second current amplitude data are described without being distinguished from each other, they will simply be referred to as "current amplitude data" below.

Current frequency data area 204V2 is configured to store the first current frequency data based on the first vibration instruction data and the second current frequency data based on the second vibration instruction data. When the first current frequency data and the second current frequency data are described without being distinguished from each other, they will simply be referred to as "current frequency data" below. The current phase data to be stored in current phase data area 204V3, on the other hand, is shared in processing of both of the first vibration instruction data and the second vibration instruction data. Therefore, current phase data area 204V3 is configured to store a single piece of current phase data. Current phase data area 204V3 may be configured to store first current phase data based on the first vibration instruction data and second current phase data based on the second vibration instruction data. These pieces of data are data showing the current amplitude, the current frequency, and the current phase in the control data for vibration motor 206 that vibrates based on the first vibration instruction data and the second vibration instruction data.

In step S201, processor 202 copies a value in the current amplitude data and a value in the current frequency data in each of the first vibration instruction data and the second vibration instruction data, in respective different areas in volatile memory 204. Specifically, the values are stored as previous amplitude data and previous frequency data in previous amplitude data area 204V4 and previous frequency data area 204V5, respectively (step S201).

Previous amplitude data area 204V4 is configured to store first previous amplitude data based on the first vibration instruction data and second previous amplitude data based on the second vibration instruction data. When the first previous amplitude data and the second previous amplitude data are described without being distinguished from each other, they will simply be referred to as "previous amplitude data" below. Previous frequency data area 204V5 is configured to store first previous frequency data based on the first vibration instruction data and second previous frequency data based on the second vibration instruction data. When the first previous frequency data and the second previous frequency data are described without being distinguished from each other, they will simply be referred to as "previous frequency data" below. When processor 202 performs the flowchart shown in Fig. 6 for the first time after start-up of game controller 200, processor 202 stores "0 V" as a value in the current amplitude data and a value in the previous amplitude data, stores "0 Hz" as a value in the current frequency data and a value in the previous frequency data, and stores "0 degree" as a value in the current phase data as initialization processing.

Processor 202 determines whether or not there is an instruction data set in vibration instruction data area 204B1 (step S202). When there is no instruction data set in vibration instruction data area 204B1 (NO in step S202), in step S203, processor 202 sets "0" as the amplitude value for each of the first vibration instruction data and the second vibration instruction data, newly generates the first vibration instruction data and the second vibration instruction data in which the value in previous frequency data area 204V5 stored in step S201 is set to the frequency value in each of the first vibration instruction data and the second vibration instruction data, and stores the first vibration instruction data and the second vibration instruction data in vibration instruction data area 204B 1 (step S203).

Thus, after vibration based on adjustment-processed vibration instruction data 110 indicated by game program 102P2 ends, such control data as gradually decreasing to 0 is generated in processing from S206 to S212 which will be described later. This vibration is end-timing vibration which will be described later. In execution of the flow shown in Fig. 5 by game program 102P2 (specifically, in the processing in S104), processor 202 may generate data in which a vibration value in the last vibration instruction data is set to "0" and the frequency value is set to a value the same as the immediately preceding frequency value. The immediately preceding frequency value means a frequency value used in immediately preceding control or a frequency value indicated in the immediately preceding vibration instruction data. Similarly, the immediately preceding amplitude value means an amplitude value used in immediately preceding control or an amplitude value indicated in the immediately preceding vibration instruction data.

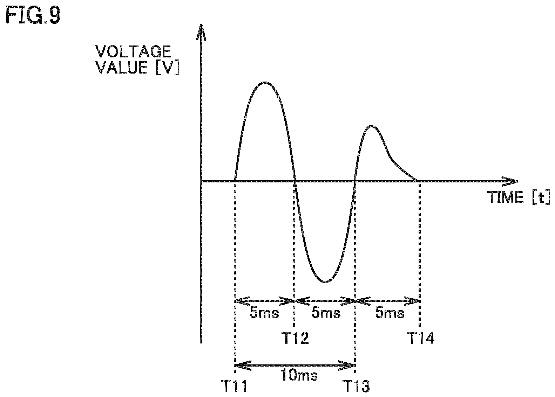

When the process again returns to S202 after the vibration instruction data stored in step S203 is processed in S204 to S212, there may be no instruction data set in vibration instruction data area 204B1. In this case, the vibration instruction data having the amplitude value "0" is stored for each of the first vibration instruction data and the second vibration instruction data again in S203, and the control data having the voltage value of zero is outputted in subsequent processing. Thus, in the present example, when vibration based on the vibration instruction data indicated by game program 102P2 ends and there is no vibration instruction data in vibration instruction data area 204B1, the control data having the voltage value of zero is kept outputted. For example, in an example in Fig. 9 which will be described later, control data having the voltage value of zero is outputted also at timing T14 or later. Vibration can thus reliably converge. Means for such control at timing T14 or later in Fig. 9 may correspond to "control for stopping vibration of the vibration motor" in the present disclosure.

Processor 202 then obtains the vibration instruction data at the top in the instruction data set in vibration instruction data area 204B1 and deletes that instruction data set from vibration instruction data area 204B1 (step S204). At the top of vibration instruction data area 204B1, the instruction data set stored in vibration instruction data area 204B1 earliest is stored. When there is instruction data set in vibration instruction data area 204B1 in step S202 (YES in step S202), processor 202 performs processing in step S204.

The first indicated amplitude value and the second indicated amplitude value included in the instruction data set obtained by processor 202 in step S204 will be referred to as an "indicated amplitude value" below, without being distinguished from each other. Similarly, a first frequency value and a second frequency value included in the instruction data set obtained by processor 202 in step S204 will be referred to as an "indicated frequency value," without being distinguished from each other.

Processor 202 determines whether or not both of the value in the first previous amplitude data and the value in the second previous amplitude data stored in step S201 are larger than 0 (step S205). When at least one of the value in the first previous amplitude data and the value in the second previous amplitude data is larger than 0 (YES in step S205), determination that vibration has continued for some time (not being start of vibration from a non-vibrating state) can be made and transition to a flow in the case of continuation of vibration in step S206 or later is made. As will be described later, steps S207 to S210 are performed for each of the first vibration instruction data and the second vibration instruction data. Determination as to whether or not vibration has started from a state in which vibration in step S205 continues is also made for each of the first vibration instruction data and the second vibration instruction data. In step S206, processor 202 substitutes one into a count variable X (step S206). Count variable X is an area prepared in volatile memory 204, and it is a counter variable for repetition of processing forty times for generation of forty pieces of control data.

Update of the first current amplitude data and the second current amplitude data, the first current frequency data and the second current frequency data, and the current phase data to generate first control data corresponding to the first vibration instruction data and second control data corresponding to the second vibration instruction data will be described below with reference to steps S201 to S210. Specifically, processor 202 performs shown processing in steps S201 to S210 on both of the first vibration instruction data and the second vibration instruction data. Fig. 7 shows that the processing is performed on a single piece of vibration instruction data in S201 to S210 for the sake of brevity of description. Steps S201 to S210 to be performed on the first vibration instruction data and steps S201 to S210 to be performed on the second vibration instruction data may be performed in parallel. As will be described with reference to step S210A which will be described later, the sum of the first control data and the second control data is written in control data area 204B2 as the control data.

Steps S207 to S210 will be described below, with attention being paid only to the first vibration instruction data. In step S207, processor 202 substitutes a value into the first current amplitude data. In step S207, processor 202 subtracts the value in the first previous amplitude data from the first indicated amplitude value. Processor 202 multiplies a result of subtraction by a value calculated by dividing a numerical value stored in count variable X by forty. Processor 202 stores in the first current amplitude data, the value calculated by adding the first previous amplitude data to a result of multiplication (step S207).

In step S208, processor 202 substitutes a value into the first current frequency data. In step S208, processor 202 subtracts a value in the first previous frequency data from the first indicated frequency. Processor 202 multiplies a result of subtraction by a value calculated by dividing a numerical value stored in count variable X by forty. Processor 202 stores in the first current frequency data, a value calculated by adding the value in the first previous frequency data to a result of multiplication (step S208).

Through the processing in steps S207 and S208, the amplitude value and the frequency of the reference waveform to be referred to for generation of the first control data are stored in the first current amplitude data and the first current frequency data, respectively. In step S209, processor 202 substitutes a value into the current phase data. Specifically, processor 202 sets a phase obtained by advancing a value in the current phase data by 0.125 ms based on the value in the first current frequency data.

Processor 202 determines the amplitude and the current phase based on the value in the first current amplitude data, the value in the first current frequency data, and the value in the current phase data and generates the first control data corresponding to the calculated voltage value to be outputted from amplifier 205 (step S210). More specifically, processor 202 determines the reference waveform from the value in the first current amplitude data and the value in the first current frequency data, and generates as the first control data, the voltage value at the phase indicated by the value in the first current phase in that reference waveform. As described above, processor 202 generates the second control data by performing steps S207 to S210 also on the second vibration instruction data similarly to the first vibration instruction data. Processor 202 writes into control data area 204B2, the control data showing the voltage value which is the sum of the voltage value shown in the first control data and the voltage value shown in the second control data (step S210A). Vibration motor 206 can thus vibrate based on both of the first vibration instruction data and the second vibration instruction data. When vibration motor 206 vibrates based on occurrence of a single vibration event in vibration control system 10, the indicated amplitude value and the indicated frequency value in at least one of the first vibration instruction data and the second vibration instruction data are 0.

The control data written in control data area 204B2 is transmitted to amplifier 205 by DMA, and amplifier 205 amplifies the voltage to the voltage value corresponding to the control data written in control data area 204B2 and applies the amplified voltage to vibration motor 206.

Processor 202 substitutes into count variable X, the value calculated by adding one to current count variable X (step S211). Processor 202 determines whether or not the value of count variable X has exceeded forty (step S212). When the value of count variable X has not exceeded forty (NO in step S212), processor 202 has the process return to step S207.

When the value of count variable X has exceeded forty (YES in step S212), processor 202 has the process return to step S201. The value of count variable X having exceeded forty means completion of generation of forty pieces of control data corresponding to the vibration instruction data obtained in step S204, that is, completion of processing of the obtained instruction data set.

As shown as steps S206 to S212, vibration control system 10 in the present embodiment performs processing for gradually bringing the immediately preceding amplitude value and the immediately preceding frequency closer to the indicated amplitude and frequency when the vibration instruction data indicates the amplitude and the frequency, which is called interpolation processing. This interpolation processing is not performed at the time of start of vibration. As a result of the processing in steps S206 to S212, forty pieces of control data to be outputted every 0.125 ms are generated from one piece of vibration instruction data.

When the process returns to step S205 and the value in the previous amplitude data is 0 (NO in step S205), processor 202 determines this situation as start of vibration and performs start processing (step S214). A case in which the value in the previous amplitude data is 0 is a case in which operation starts from a state in which vibration motor 206 is in a standstill. Determination that the previous amplitude data is substantially zero may be made in step S205. In step S205, instead of determination that the previous amplitude data is larger than 0, determination that previous control data is larger than 0 may be made. In this case, start processing is performed when the previous amplitude data is 0 or when the control data is 0 based on the phase although the previous amplitude data is not 0. In this case again, being substantially zero may be determined.

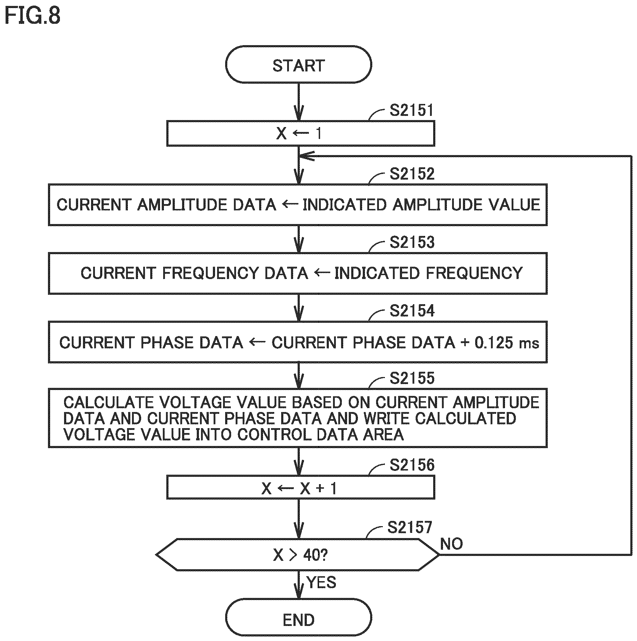

Fig. 8 is a flowchart showing a processing procedure of the start processing in step S214. Processing in the flowchart shown in Fig. 8 is started by processor 202 performing step S214 in Fig. 7. Specifically, when both of the value in the first previous amplitude data and the value in the second previous amplitude data stored in step S201 are 0 in step S205, the flowchart in Fig. 8 is performed, and each of the first vibration instruction data and the second vibration instruction data is processed. Though the first vibration instruction data will be described below, the description is also similarly applicable to the second vibration instruction data.

Processor 202 substitutes one into count variable X (step S2151). Processor 202 substitutes the first indicated amplitude value into the first current amplitude data (step S2152). Thus, at the time of start of vibration, the value of the amplitude can quickly be set to the indicated value and the effect of impact vibration can be enhanced. Processor 202 substitutes the indicated frequency into the first current frequency data (step S2153). Processor 202 substitutes into the current phase data, a phase value obtained by advancing the phase by 0.125 ms from the value substituted into the current phase data based on the frequency substituted in the first current frequency data (step S2154).

Processor 202 calculates the voltage value to be outputted from amplifier 205 based on the first current amplitude data and the current phase data and writes the first control data corresponding to the calculated voltage value into control data area 204B2 (step S2155). Processor 202 substitutes a value calculated by adding one to current count variable X into count variable X (step S2156). Thereafter, processor 202 determines whether or not the value of count variable X has exceeded forty (step S2157).

When the value of count variable X has not exceeded forty (NO in step S2157), processor 202 has the process return to step S2152. When the value of count variable X has exceeded forty (YES in step S2157), processor 202 quits the process in the flowchart in Fig. 8. Thereafter, processor 202 performs processing in step S201 in Fig. 7.

Thus, vibration control system 10 in the present embodiment can determine the control data corresponding to the voltage value every control cycle and finely control the vibration waveform. Even when vibration control system 10 processes both of the first vibration instruction data and the second vibration instruction data through the total adjustment processing, it can generate appropriate control data by pro rata allocation of the first indicated amplitude value and the second indicated amplitude value. Furthermore, by performing the frequency characteristic adjustment processing, vibration control system 10 can have vibration motor 206 operate such that displacement of the vibrator does not exceed a limit value. In addition, through the clamp adjustment processing, vibration control system 10 can generate appropriate control data even when the frequency is gradually varied.

In changing the amplitude value, noise may be made unless the voltage value is changed from 0 V. Therefore, vibration control system 10 in the first embodiment gradually changes the amplitude value for each control cycle (0.125 ms) by performing steps S207 to S210. In order to prevent noise from being made, on the other hand, change of the amplitude value may be refrained until the voltage value attains to 0 V. Then, timing to change the amplitude value is delayed. Vibration control system 10 in the present embodiment suppresses production of noise by gradually changing the amplitude value or the frequency value usually within the vibration instruction cycle (5 ms), and controls the amplitude value to be set to the indicated amplitude value when the previous voltage value is 0 V. Therefore, the vibration control system can generate vibration excellent in rising performance while production of noise is suppressed.

### [G. Exemplary Vibration Waveform Generated Based on Vibration Instruction Data]

Fig. 9 shows an exemplary waveform of the first control data generated based on the first impact event. The time-series vibration instruction data group based on the first impact event is data "(1, 100), (1, 100)". An example in which the second vibration instruction data that designates the second indicated amplitude value "0" and the second indicated frequency value "0" and the first vibration instruction data based on the first vibration event are processed based on occurrence of only the first vibration event will be described below. As the adjustment processing described above is performed, the time-series vibration instruction data group based on the first impact event is converted to data "(0.5, 100), (0.5, 100)". The vibration waveform generated based on the first impact event is outputted during a period from timing T11 to timing T13. The period from timing T11 until timing T13 is a period of 10 ms. As the flowcharts in Figs. 7 and 8 are performed during the period from timing T11 to timing T13, the vibration waveform corresponding to the amplitude value "0.5 V" at the frequency value "100 Hz" is generated. In other words, the frequency of the vibration waveform during the period from timing T11 to timing T13 is "100 Hz" and a maximum amplitude value is "0.5 V".

A waveform generated during a period from timing T11 to timing T12 is generated by processing by processor 202 on the first vibration instruction data "(0.5, 100)" at the top in the time-series vibration instruction data group based on the first impact event. A waveform generated during a period from timing T12 to timing T13 is generated by processing by processor 202 on the first vibration instruction data "(0.5, 100)" at the second place that is included in the time-series vibration instruction data group based on the first impact event.

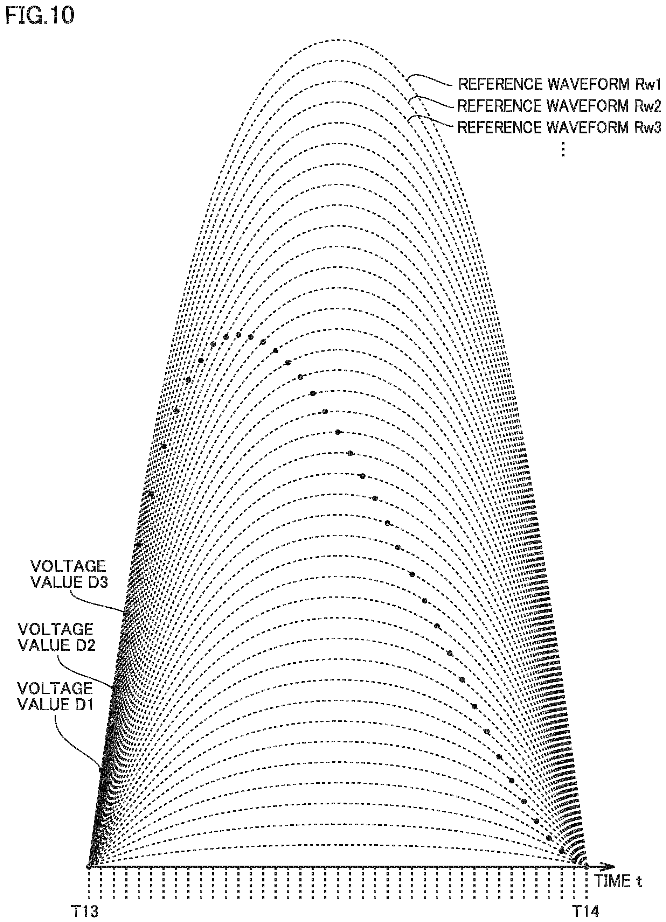

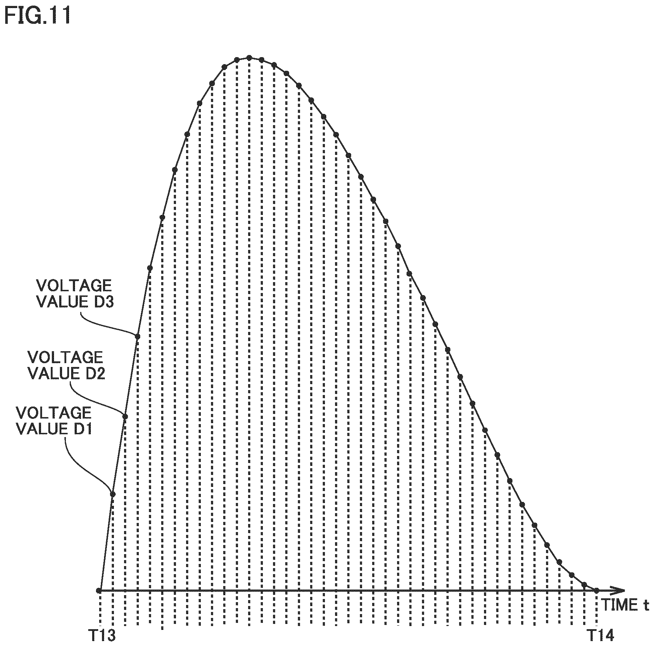

A waveform of the control data generated during a period from timing T13 to timing T14 is generated by performing steps S206 to S212) after the first indicated amplitude is set to 0 in S203 described above when there is no vibration instruction data to be processed. The waveform generated during the period from timing T13 to timing T14 will be described with reference to Figs. 10 and 11 below. Vibration generated after end of processing of adjustment-processed vibration instruction data 110 received from game device 100 will be referred to as "end-timing vibration." The control data generated during the period from timing T13 to timing T14 is exemplary control data for generation of end-timing vibration. The control data to be transmitted to amplifier 205 for generation of end-timing vibration will be referred to as "end-timing control data." In the present embodiment, processor 202 generates the end-timing control data such that vibration motor 206 performs end-timing vibration immediately after end of vibration control based on adjustment-processed vibration instruction data 110 received from game device 100. Processor 202 may have end-timing vibration generated after vibration based on the vibration instruction data generated as a result of occurrence of the ordinary vibration event, rather than the impact vibration event.

Referring back to Fig. 7, when processing of last adjustment-processed vibration instruction data 110 in the time-series vibration instruction data group ends based on the first impact event and count variable X exceeds forty in step S212, in step S201, processor 202 stores the current amplitude data ("0.5") as the previous amplitude data and stores the current frequency data (" 100 Hz") as the previous frequency data.

Therefore, when all pieces of the first vibration instruction data stored in vibration instruction data area 204B1 are processed and there is no first vibration instruction data (NO in step S202), processor 202 sets "0" as the indicated amplitude in step S203 and sets the frequency "100 Hz" identical to the value in the first previous frequency data as the first indicated frequency, and stores them in the first vibration instruction data area. Processor 202 substitutes "1" into the count variable (step S206).

The first previous amplitude data is "0.5" and the first indicated amplitude value is "0". Therefore, as processor 202 thereafter performs processing in step S207, a numerical value calculated by multiplying 0.5 by 39/40 is substituted into the first current amplitude data. In other words, 0.4875 is substituted into the first current amplitude data. The first previous frequency data is "100 Hz" and the first indicated frequency is also "100 Hz". Therefore, as processor 202 performs processing in step S208, it substitutes "100 Hz" into the first current frequency data. Processor 202 advances the current phase data by an amount comparable to 0.125 ms.

Fig. 10 is a diagram showing a reference waveform between timing T13 and timing T14. Fig. 10 shows forty reference waveforms Rw1, Rw2, Rw3 ... with a dashed line. Forty reference waveforms Rw1, Rw2, Rw3 ... will collectively be referred to as a "reference waveform Rw" below. Processor 202 determines reference waveform Rw1 from the first current amplitude data "0.4875" and the first current frequency "100 Hz". In other words, reference waveform Rw1 is a waveform having the frequency of 100 Hz and a maximum amplitude of 0.4875 (0.5x(39/40)).

In processing in step S210, processor 202 obtains as the first control data, a voltage value D1 at the time when the phase advances by 0.125 ms from timing T13 in reference waveform Rw1, and writes the voltage value into control data area 204B2. Fig. 10 shows voltage value D1. Processor 202 increments count variable X, and a value to be substituted in count variable X is "2".

Obtaining the voltage value at the timing when the phase further advances by 0.125 ms (timing advanced by 0.250 ms from timing T13) in a similar procedure will be described. The first previous amplitude data is "0.5" and the first indicated amplitude value is "0". Therefore, as processor 202 performs processing in step S207, a numerical value obtained by multiplying 0.5 by 38/40 is substituted into the first current amplitude data. In other words, 0.4750 is substituted into the first current amplitude data. The first previous frequency is "100 Hz" and the first indicated frequency is also "100 Hz". Therefore, as processor 202 performs the processing in step S208, it substitutes "100 Hz" into the first current frequency data. Processor 202 advances the current phase data by 0.125 ms.

Processor 202 determines reference waveform Rw2 based on the first current amplitude data "0.4750" and the first current frequency "100 Hz". Second reference waveform Rw2 is a waveform having the frequency of 100 Hz and the maximum amplitude of 0.4750 (0.5×(38/40)).

In processing in step S210, processor 202 obtains as the first control data, a voltage value D2 at the time when the phase advances by 0.250 ms from timing T13 in reference waveform Rw2 and writes the voltage value into control data area 204B2. Fig. 10 shows voltage value D2. Furthermore, processor 202 increments count variable X, and a value to be substituted in count variable X is "3".

Through a similar procedure, processor 202 obtains a voltage value D3 at the time when the phase further advances by 0.125 ms and writes the first control data corresponding to voltage value D3 into control data area 204B2. Processor 202 repeats output of the first control data forty times during the period from timing T13 to timing T14. Fig. 11 is a diagram showing a waveform of end-timing vibration outputted as a result of processing for each control cycle corresponding to the period from timing T13 to timing T14. At each time point of a plurality of time points during the period from timing T13 to timing T14, processor 202 decreases the maximum amplitude value of reference waveform Rw and advances the phase with lapse of time.

Thus, in vibration control system 10 in the present embodiment, as the processing in the flowcharts shown in Figs. 7 and 8 is performed, the control data for stopping vibration of vibration motor 206 is outputted to vibration motor 206 based on end of vibration control based on adjustment-processed vibration instruction data 110 received from game device 100. In the present example, the period of end-timing vibration is a period of 5 ms and identical to the vibration instruction cycle. Since vibration is stopped in the period the same as the vibration instruction cycle, falling performance of impact vibration can be better.

As shown in Fig. 10, during the period from timing T13 to timing T14 after end of vibration control based on adjustment-processed vibration instruction data 110, the control data is generated such that the amplitude value of the reference waveform gradually decreases from the amplitude value "0.5" included in the vibration instruction data (0.5, 100) processed by processor 202 immediately before. Processing for each control cycle performed forty times during gradual variation of reference waveform Rw in the vibration instruction cycle (a period of 5 ms) will be referred to as "interpolation processing" below. In the present example, during the period from timing T13 to timing T14, the frequency of reference waveform Rw is always "100 Hz" and does not vary. In the example in Fig. 9, the period from timing T13 to timing T14 may correspond to the "first period" in the present disclosure.

As the processing in the flowchart shown in Fig. 8 is performed during the period from timing T11 to timing T13, reference waveform Rw during the period from timing T11 to timing T13 always has the amplitude value "0.5" and the frequency "100 Hz". Therefore, a sinusoidal wave as shown in Fig. 9 is generated during the period from timing T11 to timing T13.

In vibration control in response to the first impact event, pieces of the vibration instruction data included in the time-series vibration instruction data group are identical, and hence an effect of the interpolation processing is not exhibited. The amplitude value or the frequency in the pieces of vibration instruction data included in the time-series vibration instruction data group, however, may vary, and in this case, the interpolation processing smoothens variation in amplitude value or variation in frequency value also while vibration continues.

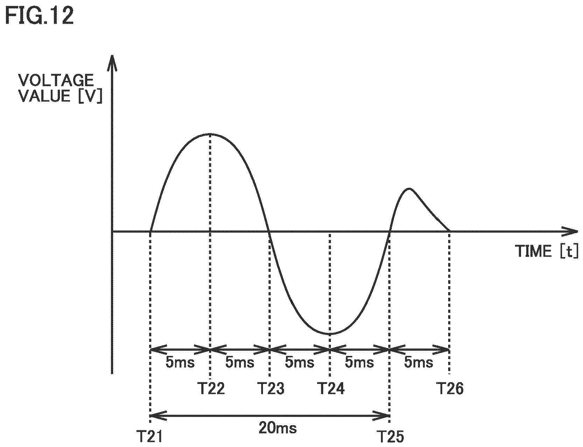

Fig. 12 shows an exemplary waveform of the control data generated based on the second impact event. As shown in Fig. 2, the time-series vibration instruction data group based on the second impact event is data "(1, 50), (1, 50), (1, 50), (1, 50)". An example in which the second vibration instruction data that designates the second indicated amplitude value "0" and the second indicated frequency value "0" and the first vibration instruction data based on the second vibration event are processed based on occurrence of only the second vibration event will be described below. As the adjustment processing described above is performed, the time-series vibration instruction data group based on the second impact event is converted to data "(1, 50), (1, 50), (1, 50), (1, 50)".

The vibration waveform generated based on the second impact event is outputted during a period from timing T21 to T25. The period from timing T21 to timing T25 is a period of 20 ms. As the flowcharts in Figs. 7 and 8 are performed during a period from timing T21 to timing T23, reference waveform Rw always has the frequency "50 Hz" and the maximum amplitude value "1" and hence a waveform which is a sinusoidal wave is generated.

A waveform corresponding to end-timing vibration generated during a period from timing T25 to timing T26 is reference waveform Rw that gradually decreases in amplitude each time the phase advances as described with reference to Figs. 10 and 11, and it is generated based on that reference waveform Rw. The period from timing T25 to timing T26 in the example in Fig. 12 may correspond to the "first period" in the present disclosure.

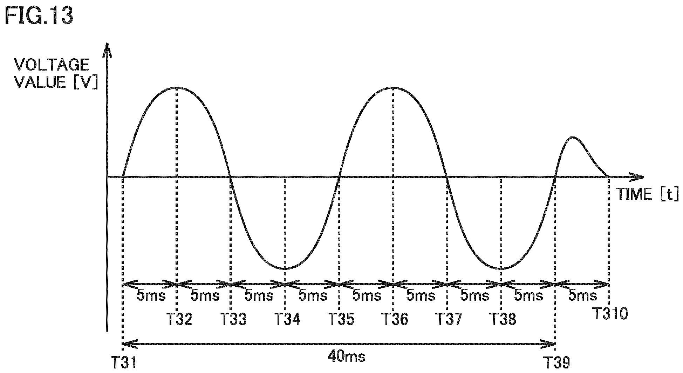

Fig. 13 shows an exemplary waveform of the control data generated based on the third impact event. As shown in Fig. 2, the time-series vibration instruction data group based on the third impact event is data "(1, 50), (1, 50), (1, 50), (1, 50), (1, 50), (1, 50), (1, 50), (1, 50)". An example in which the second vibration instruction data that designates the second indicated amplitude value "0" and the second indicated frequency value "0" and the first vibration instruction data based on the third vibration event are processed based on occurrence of only the third vibration event will be described below. As the adjustment processing described above is performed, the time-series vibration instruction data group based on the third impact event is converted to data "(1, 50), (1, 50), (1, 50), (1, 50), (1, 50), (1, 50), (1, 50), (1, 50)".

A waveform generated based on the third impact event is outputted during a period from timing T31 to timing T39. The period from timing T31 to timing T39 is a period of 40 ms. As the flowcharts in Figs. 7 and 8 are performed during the period from timing T31 to timing T39, the reference waveform always has the frequency "50 Hz" and the maximum amplitude value "1" and hence a waveform which is a sinusoidal wave is generated.

A waveform corresponding to end-timing vibration generated during a period from timing T39 to timing T310 is the reference waveform gradually decreasing in maximum amplitude as the phase advances as described with reference to Figs. 10 and 11, and it is generated based on that reference waveform. The period from timing T39 to timing T310 in the example in Fig. 13 may correspond to the "first period" in the present disclosure.

As described with reference to Figs. 9 to 13, in vibration control system 10 in the present embodiment, while the vibration continues and when vibration ends, control to gradually vary reference waveform Rw through the interpolation processing is carried out. In vibration control system 10 in the present embodiment, on the other hand, at the time of start of vibration, control to gradually vary reference waveform Rw is not carried out. Thus, a steep vibration waveform can be generated at the time of start, and vibration corresponding to collision, explosion, or the like can be applied to the user.

In vibration control system 10 in the present embodiment, by generating end-timing vibration at the time of transition of vibration motor 206 from an operating state to a standstill state, production of noise such as generation of unintended vibration can be suppressed in design as compared to stop of vibration motor 206 by inertia without vibration motor 206 being controlled.

### [H. Modification]

Other forms which are partial modification of the embodiment described above will be described below.

Though an example in which vibration control system 10 in the present embodiment is applied to the game system is described above, the system to which the vibration control system is to be applied is not limited to the game system. Vibration control system 10 in the present embodiment may be employed, for example, for a practical application other than what is called a video game, toys for children, a training system for virtual drive of a car with the use of VR or the like, and the like.

The example described above shows an exemplary configuration in which the game system applied to vibration control system 10 includes a single game controller 200, the game system applied to vibration control system 10 may include a plurality of game controllers 200.

Though the display apparatus connected to game device 100 is described as the display such as the organic EL or the head-mounted display in the example described above, for example, a display apparatus using a hologram may be applicable.

An example in which processing in the flowcharts corresponding to Figs. 5 and 6 is performed in game device 100 and processing in the flowcharts corresponding to Figs. 7 and 8 is performed in game controller 200 is described above. The entire processing included in the flowcharts in Figs. 5 to 8, however, may be performed by one of game device 100 and game controller 200. Furthermore, the processing in the flowchart performed by game device 100 is not limited to the processing in the flowcharts in Figs. 5 and 8; the game device may perform only the processing in the flowchart in Fig. 5 or may perform the processing in the flowcharts in Figs. 5, 6, and 7.

The processor included in game device 100 and game controller 200 may be configured with a single chip or a plurality of chips.

Storage of a plurality of pieces of data in an identical row in an identical table is referred to as "being associated" in the example described above. Without being limited as such, the term "being associated" encompasses a plurality of pieces of data being indirectly associated among a plurality of tables.

An example in which all pieces of vibration instruction data included in the time-series vibration instruction data group are identical in content is described above for the sake of brevity of description. The plurality of pieces of vibration instruction data included in the time-series vibration instruction data group, however, may be different in content from one another, and vibration instruction data 114 may include, for example, data "(1, 100), (1, 100), (0.7, 50), (0.5, 50)".

An example in which the waveform of the control data corresponding to end-timing vibration has the frequency the same as the frequency of the control data executed immediately before is described above. The vibration waveform corresponding to end-timing vibration, however, may have a frequency different from the frequency of the control data executed immediately before. For example, the frequency of the waveform corresponding to end-timing vibration may be determined in advance as "40 Hz", "70 Hz", "200 Hz", or the like. In this case, processor 202 gradually varies not only the amplitude value of reference waveform Rw but also the frequency in the interpolation processing.

Though an example in which the waveform of the control data is the sinusoidal wave is described above, the waveform may be a waveform in another shape such as a rectangular wave. Furthermore, the vibration instruction cycle should only be a period (25 ms in the example in the first embodiment) not longer than a length of one wavelength at the lower limit frequency of vibration motor 206, and it is not limited to the period of 5 ms. Vibration control system 10 is capable of fine control by setting the vibration instruction cycle to be shorter.

In the example described above, one piece of vibration instruction data is data for providing output of electric power over a period not longer than one wavelength of the vibration waveform. A period for which control data is outputted based on one piece of vibration instruction data, however, may be a period not longer than two wavelengths or three wavelengths. Furthermore, though game device 100 and game controller 200 are provided as separate game systems in the example described above, game device 100 and game controller 200 may integrally be provided.

Though an example in which end-timing vibration is generated as the processing in the flowchart in Fig. 7 is performed is described above, processor 202 may separately determine that the processing of adjustment-processed vibration instruction data 110 received from game device 100 has completely ended. When processor 202 determines that timing to generate end-timing vibration has come, it generates end-timing vibration by performing another flowchart different from that in Fig. 7.

Though game program 102P2 indicates normalized data as amplitude data in the example described above, it may directly designate amplitude data indicating a control voltage value. In addition, an example in which a frequency is shown on the abscissa and the frequency characteristic adjustment factor is shown on the ordinate in frequency characteristic data is described. An upper limit (V) itself of an input voltage at each frequency, however, may be shown on the ordinate in the frequency characteristic data.

In the example in Fig. 9, a duration (the period from timing T11 to timing T13) of vibration on the occurrence of a single impact event is 10 ms. The duration of vibration on the occurrence of a single impact event, however, may be another period so long as it is not longer than 50 ms. For confirmation purpose, note that the present disclosure encompasses not only a method of directly designating time but also a method of designating a period substantially not longer than 50 ms by designating the number of waves or the number of pieces of vibration instruction data.

The vibration instruction data may designate data about an amount of change in amplitude and an amount of change in frequency. In that case, the processor performs processing for calculating a present amplitude and a present frequency with the use of values of an immediately preceding amplitude and an immediately preceding frequency. Though this processing may be performed by a processor of a game console, it may be performed by a processor of a game controller.

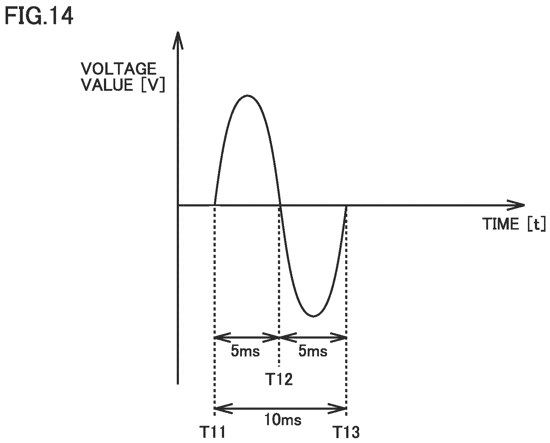

An example in Fig. 9 in which the control data having a zero voltage value is kept outputted at timing T14 or later after end-timing vibration is generated during the period from timing T13 to timing T14 is described above. Output of the control data having the zero voltage value, however, may be started from timing T13, without generation of end-timing vibration. Fig. 14 is a diagram showing a waveform in a modification. Specifically, in the modification, the control data having the zero voltage value is outputted immediately after the end of vibration based on the vibration instruction data provided by game program 102P2 (after timing T13 in Fig. 14). Alternatively, the control data reverse in phase to the immediately preceding phase may be outputted after the end of vibration based on the vibration instruction data indicated by game program 102P2 (for example, after timing T13 in Fig. 9). These examples may correspond to "control for stopping vibration of the vibration motor" in the present disclosure. Thus, in the first embodiment, as a result of end-timing control, vibration motor 206 can be stopped earlier than in an example where vibration motor 206 is not controlled at all in the absence of input of the vibration instruction data from game program 102P2. In the first embodiment, vibration control system 10 stops vibration motor 206 within the vibration instruction cycle.

An example in which processor 101 performs the adjustment processing in the order of the total adjustment processing, the frequency characteristic adjustment processing, and the clamp adjustment processing is described above. The order of the adjustment processing, however, is not limited thereto. For example, processor 101 may perform the adjustment processing in the order of the clamp adjustment processing, the total adjustment processing, and the frequency characteristic adjustment processing, or may perform the adjustment processing in another order. In the first embodiment, the total adjustment processing is performed before the frequency characteristic adjustment processing and the clamp adjustment processing so that control with importance being placed on frequency characteristics of vibration motor 206 can be carried out.

A plurality of types of game controller 200 may be applicable to vibration control system 10. The frequency characteristic data described above may be different depending on the types of game controller 200. The plurality of types of game controller 200 may include amplifiers 205 and vibration motors 206 different in type.

### [Second Embodiment]

Though the example in which game program 102P2 provides the adventure game is described in the first embodiment, contents of game program 102P2 may be otherwise. An example in which game program 102P2 provides a music play game will be described in a second embodiment. Furthermore, in the second embodiment, vibration instruction data area 103B3 is configured to store one piece of vibration instruction data corresponding to one certain timing. Specifically, an example in which only the first vibration instruction data is stored and the second vibration instruction data is not stored in the instruction data set will be described in the second embodiment. Therefore, in the adjustment processing in the second embodiment, the total adjustment processing for pro rata allocation of the first indicated amplitude value and the second indicated amplitude value is not performed but only the frequency characteristic adjustment processing and the clamp adjustment processing are performed. The clamp adjustment processing in the second embodiment is different from the clamp adjustment processing in the first embodiment; pro rata allocation processing between the frequency-characteristic-adjusted first indicated amplitude and the frequency-characteristic-adjusted second indicated amplitude is not performed but whether or not the frequency-characteristic-adjusted first indicated amplitude exceeds the first clamp value is simply determined.

In the example in the second embodiment, game program 102P2 provides the music play game. In the music play game, game controller 200 is handled as simulating a predetermined musical instrument. The predetermined musical instrument includes, for example, a drum, a cymbal, a triangle, a violin, a trumpet, a piano, or various musical instruments such as percussion, string instruments, woodwind instruments, brass instruments, and reed instruments. In the example in the second embodiment, a musical instrument in the game is played based on input from the user and vibration is generated in response to play of the musical instrument.

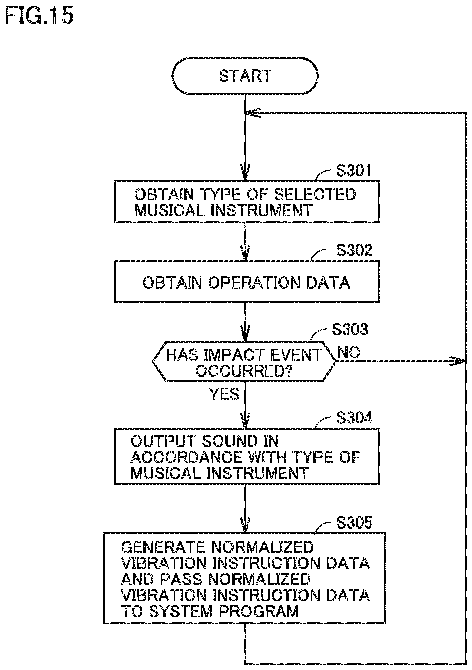

Fig. 15 is a flowchart showing a procedure of processing for generating vibration instruction data 114 including a normalized amplitude value in game device 100 in the second embodiment. Processing in the flowchart shown in Fig. 15 is performed by execution of game program 102P2 by processor 101.

The flowchart shown in Fig. 15 is started to be performed as processor 101 starts execution of game program 102P2. Processor 101 obtains the type of the musical instrument selected by the user (step S301).

Processor 101 obtains operation data (step S302). Processor 101 determines whether or not an impact event has occurred based on the operation data (step S303). In the second embodiment, obtainment in step S302, of the operation data associated in advance for each musical instrument selected in step S301 is defined as a condition for occurrence of the impact event.

For example, the condition for occurrence of the impact event in an example where the drum is selected is swing of game controller 200 in a rod shape in a predetermined direction at an angular velocity within a predetermined range. In another example, the condition for occurrence of the impact event in an example where the piano is selected is pressing of a button at the surface of game controller 200. Thus, in the musical instrument play game in the second embodiment, the user can give simulated performance with game controller 200 being simulated as a drum stick.

When the impact event has not occurred (NO in step S303), processor 101 has the process return to step S301. When the impact event has occurred (YES in step S303), processor 101 outputs sound in accordance with the type of the musical instrument (step S304). In the example where the drum has been selected, sound at the time when the drum is played with the drum stick is outputted.

Processor 101 generates vibration instruction data 114 (or the time-series vibration instruction data group) by executing game program 102P2 and passes generated vibration instruction data 114 to system program 102P1 (step S305).

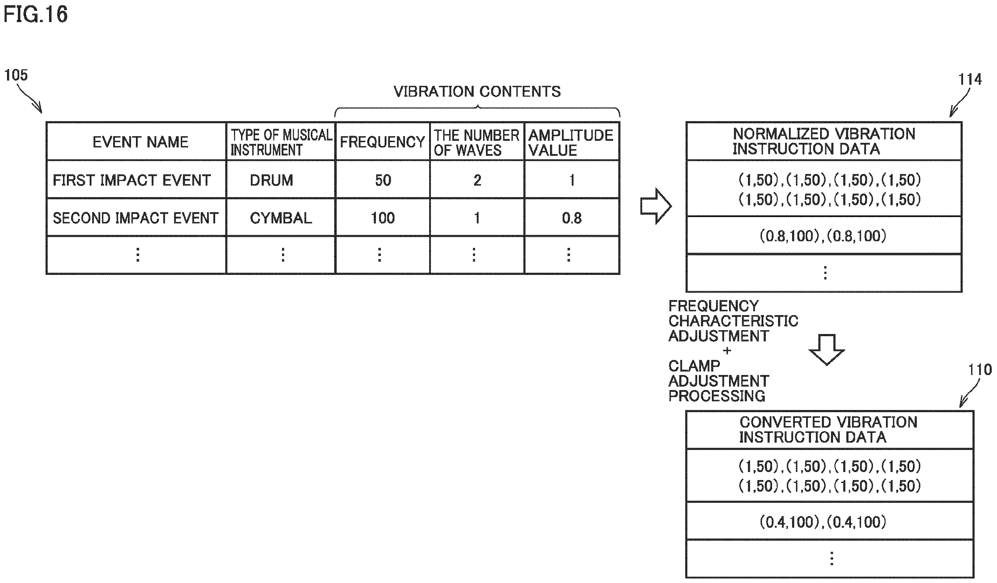

Fig. 16 is a diagram for illustrating exemplary generation of adjustment-processed vibration instruction data 110 based on vibration file 105 in the second embodiment.

In vibration control system 10 in the second embodiment, vibration file 105 in game program 102P2 with which game device 100 can execute the music play game is referred to and vibration instruction data 114 is initially generated. Fig. 16 shows in an upper left portion, vibration file 105 as a table. In vibration file 105 in the example in Fig. 16, data on the event name, data on the type of the musical instrument, and data on vibration contents are associated with one another. The data showing the type of the musical instrument includes data showing the types of the plurality of musical instruments described above from which the user can make selection. The data showing the vibration contents includes the frequency, the number of wavelengths, and the amplitude as in the first embodiment.

The type of the musical instrument "drum", the frequency "50", the number of wavelengths "2", and the amplitude "1" are associated with the event name "first impact event" in the second embodiment. In other words, the first impact event in the second embodiment is an event that provides output of the voltage in accordance with the maximum output voltage allowed to be outputted from amplifier 205 to vibration motor 206 by two wavelengths at the wavelength of 50 Hz.

The type of the musical instrument "cymbal", the frequency "100", the number of wavelengths "1", and the amplitude "0.8" are associated with the event name "second impact event" in the second embodiment. In other words, the second impact event is an event that provides output of the voltage in accordance with 80% of the maximum output voltage allowed to be outputted from amplifier 205 to vibration motor 206 by one wavelength at the wavelength of 100 Hz.

In the second embodiment again, processor 101 generates vibration instruction data 114 including the normalized amplitude value. In the second embodiment, the time-series vibration instruction data group generated based on occurrence of the first impact event includes eight pieces of vibration instruction data 114 "(1, 50), (1, 50), (1, 50), (1, 50), (1, 50), (1, 50), (1, 50), (1, 50)". In the second embodiment, the time-series vibration instruction data group generated based on occurrence of the second impact event includes two pieces of vibration instruction data 114 "(0.8, 100), (0.8, 100)".

Processor 101 obtains the frequency characteristic adjustment factor at each frequency with the data corresponding to the graph in Fig. 3 and performs the frequency characteristic adjustment processing. In addition, processor 101 performs the clamp adjustment processing on the indicated vibration value to generate converted vibration instruction data 114 shown in Fig. 16. For converted vibration instruction data 110 corresponding to the first impact event, processor 101 refers to the data corresponding to the graph in Fig. 3 to specify that the frequency characteristic adjustment factor of vibration motor 206 is "1" when vibration motor 206 operates at the frequency of 50 Hz. Processor 101 calculates the amplitude value "1" by multiplying the frequency characteristic adjustment factor "1" by a normalized amplitude parameter "1" in vibration instruction data 114 corresponding to the first impact event. When vibration motor 206 is not vibrating on the occurrence of the first impact event, processor 101 obtains "1 " as the first clamp value for each piece of data in the time-series vibration instruction data group generated based on occurrence of the first impact event. Each piece of data in the time-series vibration instruction data group does not exceed the first clamp value, and hence processor 202 quits the clamp adjustment processing without changing the frequency-characteristic-adjusted amplitude value "1".

For frequency-characteristic-adjustment-processed and clamp-adjustment-processed vibration instruction data 110 corresponding to the second impact event, processor 101 refers to the data corresponding to the graph in Fig. 3 to specify that the frequency characteristic adjustment factor is "0.5" when vibration motor 206 operates at the frequency of 100 Hz. Processor 101 calculates the amplitude value "0.4" by multiplying the frequency characteristic adjustment factor "0.5" by the normalized amplitude value "0.8" in vibration instruction data 114 corresponding to the second impact event. When vibration motor 206 is not vibrating on the occurrence of the second impact event, processor 101 obtains "0.5" as the first clamp value for each piece of data in the time-series vibration instruction data group generated based on occurrence of the second impact event. Each piece of data in the time-series vibration instruction data group does not exceed the first clamp value, and hence processor 101 quits the clamp adjustment processing without changing the frequency-characteristic-adjusted amplitude value "0.4".

Consequently, in the second embodiment, processor 101 outputs to game controller 200, data "(1, 50), (1, 50), (1, 50), (1, 50), (1, 50), (1, 50), (1, 50), (1, 50)" as adjustment-processed vibration instruction data 110 corresponding to the first impact event. Processor 101 outputs to game controller 200, data "(0.4, 100), (0.4, 100)" as adjustment-processed vibration instruction data 110 corresponding to the second impact event. Thus, in the second embodiment, in the music play game, vibration in conformity with the selected musical instrument can be applied to the user.

In the second embodiment, the amplitude value "0.8" is associated with the cymbal. Thus, in vibration control system 10 in the present embodiment, the amplitude value is not limited to "1" so long as it is within a range from 0 to 1. In the second embodiment, the amplitude value "0.8" associated with the cymbal may correspond to the "amplitude value corresponding to the maximum output voltage" allowed to be outputted from the amplifier in the present disclosure.

### [Third Embodiment]

Though an example in which game program 102P2 provides the music play game is described in the second embodiment, contents of game program 102P2 may be otherwise. An example in which game program 102P2 provides a rhythm game will be described in a third embodiment.

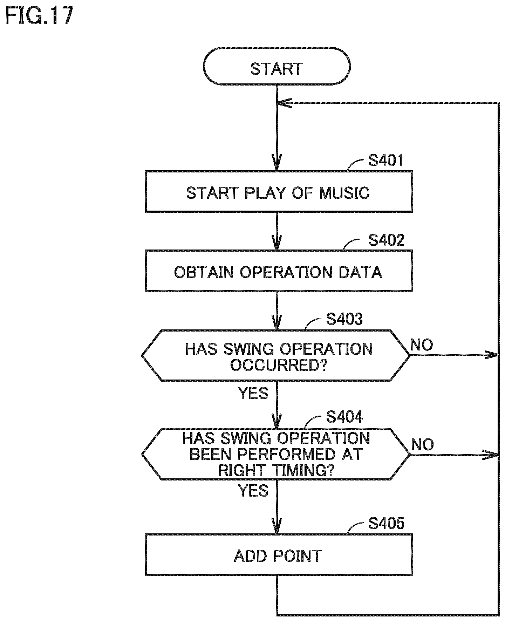

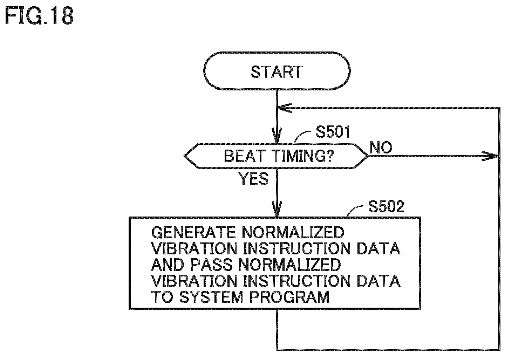

An example in which vibration is generated in response to input from the user is described in the first and second embodiments. Vibration control system 10, however, may generate vibration at predetermined timing, not in response to input from the user. In the example in the third embodiment, processor 101 performs a flowchart in Fig. 17 and a flowchart in Fig. 18 in parallel to generate adjustment-processed vibration instruction data 110.

The rhythm game in the third embodiment is a game in which music is outputted and the user is caused to perform a predetermined operation at predetermined timing in the music for test of the user's sense of rhythm. The predetermined timing refers to timing when the user should perform an operation. In the game in the third embodiment, vibration which serves as the reference of the rhythm is outputted at constant time intervals, which is called "beat vibration." In the third embodiment, the operation to be performed by the user at predetermined timing is an operation to swing game controller 200 in the rod shape at a predetermined angular velocity or higher. An operation to swing game controller 200 in the rod shape at the predetermined angular velocity or higher will be referred to as a "swing operation" below. In the rhythm game in the third embodiment, a point is added as the swing operation is performed at the predetermined timing, and a final point at a time point of end of the music is shown to the user. As beat vibration is outputted at constant intervals, the user more readily senses timing. Timing of operation by the user may be matched with beat timing.

Fig. 17 is a flowchart showing a procedure of execution of the rhythm game in the third embodiment. Processing in the flowchart shown in Fig. 17 is performed by execution of game program 102P2 by processor 101.

Processor 101 starts play of the music (step S401). The music in step S401 may be, for example, classical music, game BGM, or the like. Processor 101 obtains operation data (step S402). Processor 101 determines whether or not the swing operation has been performed (step S403).

When the swing operation has not been performed (NO in step S403), processor 101 performs other processing for proceeding with the rhythm game and has the process return to step S401. When the swing operation has been performed (YES in step S403), processor 101 determines whether or not the swing operation in step S403 has been performed at right timing (step S404).

When the swing operation has not been performed at the right timing (NO in step S404), processor 101 performs other processing for proceeding with the rhythm game and has the process return to step S401. When the swing operation has been performed at the right timing (YES in step S404), processor 101 performs point addition processing in the rhythm game (step S405). After processor 101 quits the point addition processing, processor 101 performs other processing for proceeding with the rhythm game and has the process return to step S401.

Fig. 18 is a flowchart showing a procedure of processing for generating vibration instruction data 114 including a normalized amplitude value in game device 100 in the third embodiment. Processor 101 determines whether or not current timing is beat timing (step S501). The beat timing comes at constant time intervals. When current timing is not the beat timing (NO in step S501), processor 101 repeats processing in step S501.

When the current timing is the beat timing (YES in step S501), processor 101 generates vibration instruction data 114 and passes generated vibration instruction data 114 (or the time-series vibration instruction data group) to system program 102P1 (step S502).

Thus, in the third embodiment, instead of generation of vibration based on input from the user, vibration is generated at predetermined timing during the music based on output of the music. Thus, in the rhythm game in the third embodiment, the user can recognize timing to perform the swing operation based on vibration. Furthermore, as described in the first embodiment, in vibration control system 10, strong vibration can be applied by the interpolation processing not being performed at the time of start. Thus, in the third embodiment, the user can recognize vibration also while the user is performing the swing operation.

### [Fourth Embodiment]

An example in which processor 101 on the side of game device 100 performs the frequency characteristic adjustment processing corresponding to steps S106 and S107 in Fig. 6 is described in the first embodiment. The frequency characteristic adjustment processing, however, may be performed by processor 202 on the side of game controller 200. In a fourth embodiment, description of features the same as those in the first embodiment will not be repeated.

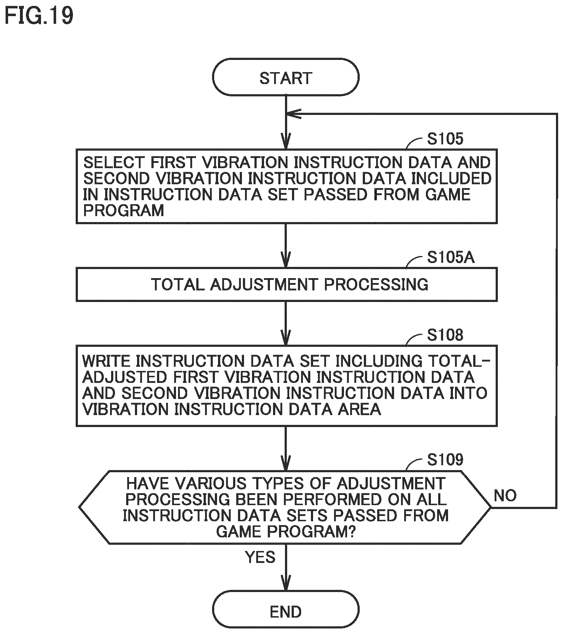

In the fourth embodiment, processor 202 is configured to be accessible to the frequency characteristic data shown in Fig. 3. For example, the frequency characteristic data shown in Fig. 3 may be stored in non-volatile memory 203 of game controller 200. Fig. 19 is a flowchart showing a procedure for converting vibration instruction data performed in game device 100 in the fourth embodiment. In the fourth embodiment, processor 101 does not perform processing in steps S106, S107, and S107A (the clamp adjustment processing) in the first embodiment. In other words, in the fourth embodiment, only the total adjustment processing is performed in game device 100.

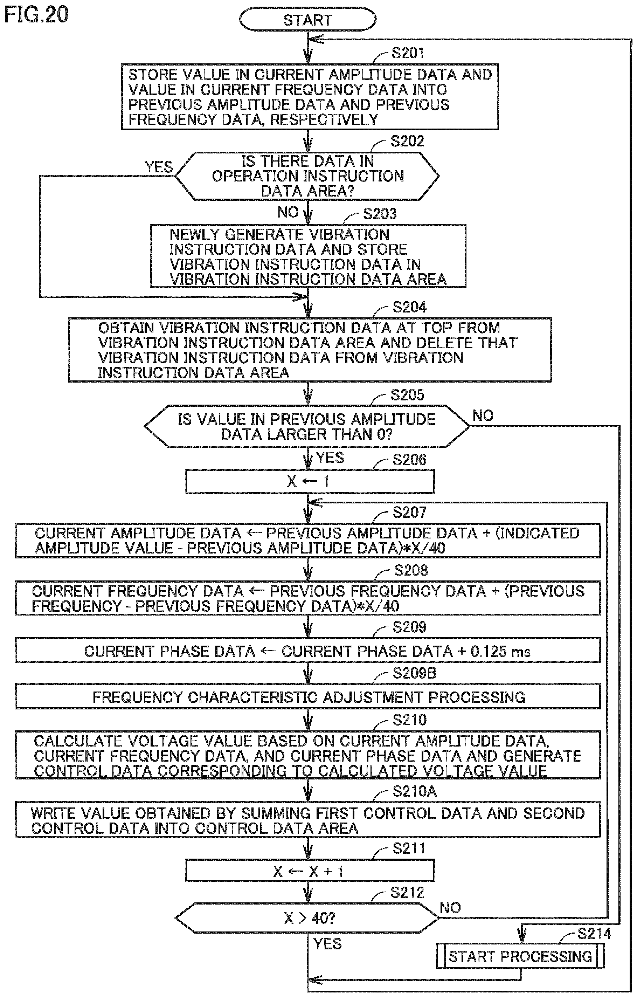

Fig. 20 is a flowchart showing a processing procedure in generation of control data performed in game controller 200 in the fourth embodiment. In the fourth embodiment, processor 202 updates the current phase data in step S209 and thereafter performs the frequency characteristic adjustment processing (step S209B). In step S209B, processor 202 refers to the frequency characteristic data to specify the frequency characteristic adjustment factor corresponding to the current frequency data updated in step S208 and adjusts the amplitude value in the current amplitude data by multiplying the current amplitude data in step S207 by the specified frequency characteristic adjustment factor. In other words, in the fourth embodiment, the frequency characteristic adjustment processing is performed every control cycle rather than the vibration instruction cycle.

Therefore, even when the frequency indicated in the present vibration instruction data varies from the frequency indicated in the previous vibration instruction data, processor 202 can perform the frequency characteristic adjustment processing for each frequency in the process of variation. Therefore, for example, even when the frequency gradually varies from 50 Hz to 150 Hz, the processor can make the frequency characteristic adjustment corresponding to the vicinity of the frequency of 100 Hz during the course of variation. Therefore, in the fourth embodiment, without performing the clamp adjustment processing, unintended variation in behavior in the process of gradual variation of the frequency can be suppressed, and an appropriate amplitude value in accordance with the frequency can be determined every control cycle.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. A vibration control system (10) that controls a vibration motor (206), the vibration control system (10) comprising:
means that obtains vibration instruction data (110, 114) that indicates at least an amplitude of vibration of the vibration motor;
means that generates control data based on the obtained vibration instruction data (110, 114) and controls the vibration motor (206) with the control data; and
means that determines at least one of whether previous control data is zero, whether previous control data is substantially zero, whether a previous amplitude is zero, or whether a previous amplitude is substantially zero, wherein
in the control, the control data is generated, in accordance with the determination, by selecting between (i) the control data being generated as gradually bringing the amplitude closer to an amplitude designated by or derived from present vibration instruction data (110, 114) and (ii) the control data being generated immediately corresponding to the amplitude designated by or derived from the present vibration instruction data (110, 114).

2. The vibration control system according to claim 1, wherein
in the control, interpolating amplitude data in a second cycle shorter than a first cycle as gradually bringing the amplitude closer to the amplitude designated by or derived from the present vibration instruction data (110, 114) is generated to generate the control data in the second cycle corresponding to the interpolating amplitude data, and to generate the control data in the second cycle corresponding to the amplitude designated by or derived from the present vibration instruction data (110, 114) when it is determined in the determination that the previous amplitude or the previous control data is zero or substantially zero.

3. The vibration control system according to claim 2, wherein
the vibration instruction data (110, 114) is data that further indicates a frequency,
in the control, interpolating frequency data in the second cycle shorter than the first cycle as gradually bringing the frequency closer to a frequency designated by or derived from the present vibration instruction data (110, 114) is generated, and
the generation of the control data is performed to generate the control data corresponding to the frequency designated by the vibration instruction data when it is determined in the determination that a previous amplitude or previous control data is zero or substantially zero.

4. The vibration control system according to any of claims 1 to 3, wherein the vibration instruction data (110, 114) is data that further indicates a frequency, and
the vibration control system further comprises
means that stores frequency characteristic data on a voltage allowed to be inputted to the vibration motor (206) at each frequency or a voltage allowed to be outputted from an amplifier (205) that controls the vibration motor (206) at each frequency,
means that determines an allowable value of the voltage allowed to be inputted or the voltage allowed to be outputted by referring to the frequency characteristic data based on the frequency designated by the vibration instruction data (110, 114), and
means that determines the amplitude to be used for control based on the determined allowable value.

5. The vibration control system according to claim 4, wherein
the frequency characteristic data is data showing a ratio of the voltage allowed to be inputted or the voltage allowed to be outputted at each frequency to a maximum input voltage to the vibration motor (206) or a maximum output voltage from the amplifier (205).

6. The vibration control system (10) according to any of claims 1 to 3, further comprising means that generates the vibration instruction data (110, 114) that indicates an amplitude of zero when the vibration instruction data (110, 114) is not obtained.

7. A program causing a computer of a vibration control system (10) that controls a vibration motor (206) to perform:
obtaining vibration instruction data (110, 114) that indicates at least an amplitude of vibration of the vibration motor;
generating control data based on the obtained vibration instruction data (110, 114) and controlling the vibration motor (206) with the control data; and
determining at least one of whether previous control data is zero, whether previous control data is substantially zero, whether a previous amplitude is zero, and whether a previous amplitude is substantially zero, wherein
in the control, the control data is generated, when it is determined in the determining that previous control data is not zero or substantially zero, as the control data being generated as gradually bringing the amplitude closer to an amplitude designated by or derived from present vibration instruction data, and when it is determined in the determining that previous control data is zero or substantially zero, as the control data being generated immediately corresponding to the amplitude designated by or derived from the present vibration instruction data (110, 114).

8. The program according to claim 7, further causing the computer to perform:
generating interpolating amplitude data in a second cycle shorter than a first cycle as gradually bringing the amplitude closer to the amplitude designated by or derived from the present vibration instruction data (110, 114) to generate the control data in the second cycle corresponding to the interpolating amplitude data, and to generate the control data in the second cycle corresponding to the amplitude designated by or derived from the present vibration instruction data (110, 114) when it is determined in the determining that the previous amplitude or the previous control data is zero or substantially zero.

9. The program according to claim 7 or 8, wherein
the vibration instruction data (110, 114) is data that further indicates a frequency,
in the control, interpolating frequency data in a second cycle shorter than a first cycle as gradually bringing the frequency closer to a frequency designated by or derived from the present vibration instruction data (110, 114) is generated, and
the generation of the control data is performed to generate the control data corresponding to the frequency designated by the vibration instruction when it is determined in the determining that the previous amplitude or the previous control data is zero or substantially zero.

10. The program according to any of claims 7 to 9, wherein
the vibration instruction data (110, 114) is data that further indicates a frequency, and
in the control, by referring to frequency characteristic data on a voltage allowed to be inputted to the vibration motor (206) at each frequency or a voltage allowed to be outputted from an amplifier (205) that controls the vibration motor (206) at each frequency based on the frequency indicated in the vibration instruction data (110, 114), an allowable value of the voltage allowed to be inputted or the voltage allowed to be outputted is determined and the amplitude to be used for control based on the determined allowable value is determined.

11. The program according to claim 10, wherein
the frequency characteristic data is data showing a ratio of the voltage allowed to be inputted or the voltage allowed to be outputted at each frequency to a maximum input voltage to the vibration motor (206) or a maximum output voltage from the amplifier (205).

12. The program according to any of claims 7 to 9, further causing the computer to perform generating the vibration instruction data (110, 114) that indicates an amplitude of zero when the vibration instruction data (110, 114) is not obtained.

13. The program according to any of claims 7 to 9, to be used in a vibration system comprising a computer device (100) and a controller (200), the program being to be executed by a computer of the controller (200).

14. The program according to claim 13, wherein
the controller (200) is an operation portion (200) separate from the computer device (100).

15. An information processing method to be used in a vibration control system (10), the information processing method comprising:
obtaining vibration instruction data (110, 114) that indicates at least an amplitude of vibration of a vibration motor;
generating control data based on the obtained vibration instruction data (110, 114) and controlling the vibration motor (206) with the control data; and
determining whether previous control data is zero or substantially zero or whether a previous amplitude is zero or substantially zero, wherein
in the control, the control data is generated, , by selecting between (i) the control data being generated as gradually bringing the amplitude closer to an amplitude designated by or derived from present vibration instruction data (110, 114) when it is determined in the determining that previous control data is not zero or substantially zero, and (ii) the control data being generated immediately corresponding to the amplitude designated by or derived from the present vibration instruction data (110, 114) when it is determined in the determining that the previous control data is zero or substantially zero.

16. A game controller incorporating the vibration motor (206), the computer, and the program according to any of claims 7 to 9 to be executed by the computer.
